(19) Europäisches Patentamt
European Patent Office
Office européen des brevets

(11) EP 3 937 493 A1

(12) **EUROPEAN PATENT APPLICATION**
published in accordance with Art. 153(4) EPC

(43) Date of publication:
**12.01.2022 Bulletin 2022/02**

(21) Application number: **20770286.1**

(22) Date of filing: **05.03.2020**

(51) Int Cl.:
***H04N 19/136*** *(2014.01)* ***H04N 19/176*** *(2014.01)*
***H04N 19/186*** *(2014.01)* ***H04N 19/70*** *(2014.01)*
***H04N 19/96*** *(2014.01)*

(86) International application number:
**PCT/JP2020/009356**

(87) International publication number:
**WO 2020/184366 (17.09.2020 Gazette 2020/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.03.2019 JP 2019043098**

(71) Applicants:
- **Sharp Kabushiki Kaisha**
**Sakai City**
**Osaka 590-8522 (JP)**
- **FG Innovation Company Limited**
**Hong Kong (CN)**

(72) Inventors:
- **ZHOU, Tianyang**
**Sakai City, Osaka 590-8522 (JP)**
- **SASAKI, Eiichi**
**Sakai City, Osaka 590-8522 (JP)**
- **IKAI, Tomohiro**
**Sakai City, Osaka 590-8522 (JP)**

(74) Representative: **Müller Hoffmann & Partner Patentanwälte mbB**
**St.-Martin-Strasse 58**
**81541 München (DE)**

(54) **IMAGE DECODING DEVICE**

(57) The present invention improves the performance of prediction image generation processing in an image decoding device. The image decoding device includes: a parameter decoding portion (302), decoding splitting information about splitting performed by means of a common tree structure on a luma block and a chroma block and prediction information; and a prediction image generation portion (308), generating a prediction image, wherein if the chroma block is split into blocks having a size smaller than a specified block size, then the parameter decoding portion decodes common prediction information for each block.

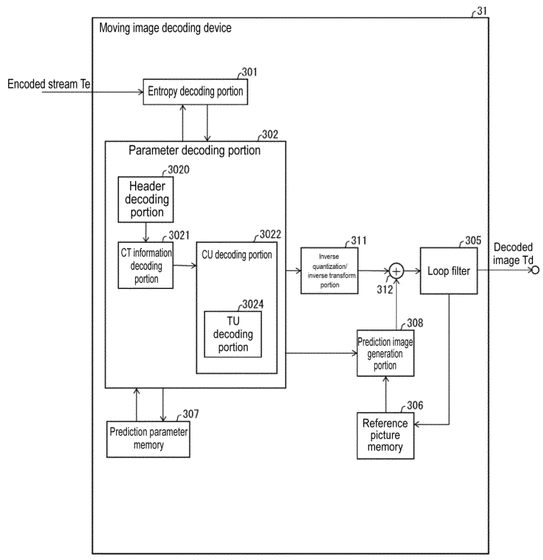


FIG. 6

EP 3 937 493 A1

**Description**

TECHNICAL FIELD

Embodiments of the present invention relate to an image decoding device.

BACKGROUND

For the purposes of transmitting or recording moving images efficiently, a moving image encoding device is used to generate encoded data by encoding a moving image, and a moving image decoding device is used to generate a decoded image by decoding the encoded data.

Specific moving image encoding schemes include, for example, modes provided in H.264/AVC, High-Efficiency Video Coding (HEVC), etc.

In such moving image encoding schemes, images (pictures) forming a moving image are managed by a hierarchical structure, and are encoded/decoded for each CU, wherein the hierarchical structure includes slices acquired by splitting the images, coding tree units (CTUs) acquired by splitting the slices, coding units (sometimes also referred to as CUs) acquired by splitting the coding tree units, and transform units (TUs) acquired by splitting the coding units.

In addition, in such moving image encoding schemes, sometimes, a prediction image is generated on the basis of local decoded images acquired by encoding/decoding input images, and prediction errors (sometimes also referred to as "difference images" or "residual images") acquired by subtracting the prediction image from the input images (original images) are encoded. Prediction image generation methods include inter-picture prediction (inter-frame prediction) and intra-picture prediction (intra-frame prediction).

Further, moving image encoding and decoding technologies of recent years include non-patent document 1. In VVC, splitting methods may employ various split trees including a quad tree, a binary tree, and a ternary tree. However, in intra-frame prediction for chroma, small blocks such as $2\times2/4\times2/2\times4$ need to be encoded and decoded. Techniques for simplifying chroma prediction of a small block include non-patent document 2 in which the size of a chroma block of a DUAL tree is restricted and a prediction mode of the small chroma block is restricted and non-patent document 3 in which a reference pixel for chroma prediction can be changed to perform parallel processing of prediction of small chroma blocks.

PRIOR ART DOCUMENTS

Non-patent Documents

Non-patent document 1: "Versatile Video Coding (Draft 4)", JVET-M1001-v1, Joint Video Exploration Team (JVET) of ITU-T SG 16 WP 3 and ISO/IEC JTC 1/SC 29/WG 11, 2019-02-01

Non-patent document 2: "Non-CE3: Intra Chroma Partitioning and Prediction Restriction", JVET-M0065-v1, Joint Video Exploration Team (JVET) of ITU-T SG 16 WP 3 and ISO/IEC JTC 1/SC 29/WG 11, 2018-12-28

Non-patent document 3: "CE3-related: Shared Reference Samples for Multiple Chroma Intra CBs", JVET-M0169-v1, Joint Video Exploration Team (JVET) of ITU-T SG 16 WP 3 and ISO/IEC JTC 1/SC 29/WG 11, 2019-01-02

SUMMARY

Problems to be solved by the invention

However, in the technique in non-patent document 1, the overhead of each pixel of a small block is large, and especially a processing delay in intra-frame prediction increases; therefore, an overall throughput is reduced. In addition, a method in which two different split trees (DUAL tree) are used for luma and chroma and a method in which a common split tree (SINGLE tree) is used for luma and chroma are provided. The single tree has the following defect: the same splitting is applied to luma and chroma; therefore, when restrictions are simply made to the size of a chroma block (for example, splitting of a chroma block having a size smaller than a specified size is prohibited), a corresponding luma block cannot be split, resulting in that the size of the luma block increases and compression performance is greatly reduced.

In the techniques in non-patent document 2 and non-patent document 3, a small chroma block is maintained, and prediction processing is simplified; however, decoding image derivation processing such as inverse quantization, inverse transform, etc., is performed in the small chroma block; therefore, the simplification of the prediction processing alone results in a problem in the throughput of the processing. In addition, the technique in non-patent document 3 needs parallel processing employing medium granularity, and this technique cannot be used in software not supporting parallel processing other than parallel processing employing a small-granularity computing level and parallel processing employing a large-granularity thread level.

A solution of the present invention is completed for the aforementioned problems, and the purpose thereof is to improve the performance of prediction image generation processing in an image decoding device.

Technical solutions

In order to solve the aforementioned problems, an image decoding device according to a solution of the present invention comprises: a parameter decoding portion, decoding splitting information about splitting performed by means of a common tree structure on a luma block and a chroma block and prediction information that is referred to in generation processing in which a prediction image of each block acquired by means of splitting is generated; and a prediction image generation portion, generating, referring to the splitting information and the prediction information decoded by the parameter decoding portion, a prediction image related to each luma block and each chroma block, wherein if the chroma block is split into blocks having a size smaller than a specified block size, then the prediction parameter decoding portion decodes common prediction information for each block comprised in the chroma block.

Beneficial effect

According to a solution of the present invention, the performance of prediction image generation processing in an image decoding device can be improved.

BRIEF DESCRIPTION OF THE DRAWINGS

FIG. 1 is a schematic diagram showing components of an image transmission system according to this embodiment.
FIG. 2 is a diagram showing components of a transmitting device equipped with a moving image encoding device according to this embodiment and components of a receiving device equipped with a moving image decoding device according to this embodiment. FIG. 2(a) shows a transmitting device equipped with a moving image encoding device, and FIG. 2(b) shows a receiving device equipped with a moving image decoding device.
FIG. 3 is a diagram showing components of a recording device equipped with a moving image encoding device according to this embodiment and a reproducing device equipped with a moving image decoding device according to this embodiment. FIG. 3(a) shows a recording device equipped with a moving image encoding device, and FIG. 3(b) shows a reproducing device equipped with a moving image decoding device.
FIG. 4 is a diagram showing a hierarchical structure of data in an encoded stream.
FIG. 5 is a diagram showing an example of CTU splitting.
FIG. 6 is a schematic diagram showing components of a moving image decoding device.
FIG. 7 is a flowchart illustrating schematic operation of a moving image decoding device.
FIG. 8 is a flowchart illustrating operation of a CT information decoding portion.
FIG. 9 is a diagram showing an example of configurations of a syntax table of CTU information and QT information.
FIG. 10 is a diagram showing an example of configurations of a syntax table of Multi Tree (MT) information.
FIG. 11 is a block diagram showing components of a moving image encoding device.
FIG. 12 is a diagram showing an example of configurations of decoding of a prediction flag mode.
FIG. 13 is a diagram showing an example of configurations of a syntax table of a CT according to this embodiment.
FIG. 14 is a diagram showing an example of configurations of a syntax table of a CT according to this embodiment.
FIG. 15 is a diagram showing an example of configurations of a syntax table of a CU according to this embodiment.
FIG. 16 is a diagram showing an example of configurations of a syntax table of a TU according to this embodiment.
FIG. 17 is a diagram showing an example of configurations of a syntax table of a CT according to this embodiment.
FIG. 18 is a diagram showing an example of configurations of a syntax table of a CT according to this embodiment.
FIG. 19 is a diagram showing an example of configurations of a syntax table of a CT according to this embodiment.
FIG. 20 is a diagram showing an example of configurations of a syntax table of a CU according to this embodiment.

## DETAILED DESCRIPTION

(First embodiment)

Embodiments of the present invention are described below with reference to the accompanying drawings.

FIG. 1 is a schematic diagram showing components of an image transmission system 1 according to this embodiment.

The image transmission system 1 is a system for transmitting an encoded stream acquired by encoding an encoding object image, decoding the transmitted encoded stream, and displaying an image. Components of the image transmission system 1 include: a moving image encoding device (image encoding device) 11, a network 21, a moving image decoding device (image decoding device) 31, and a moving image display device (image display device) 41.

An image T is inputted to the moving image encoding device 11.

The network 21 transmits encoded streams Te generated by the moving image encoding device 11 to the moving image decoding device 31. The network 21 is the Internet, a wide area network (WAN), a local area network (LAN), or a combination thereof. The network 21 is not necessarily limited to a bidirectional communication network, and may be a unidirectional communication network for transmitting broadcast waves such as terrestrial digital broadcasting and satellite broadcasting. In addition, the network 21 may also be replaced with a storage medium in which the encoded streams Te are recorded, such as Digital Versatile Disc (DVD, registered trademark), Blue-ray Disc (BD, registered trademark), etc.

The moving image decoding device 31 decodes the encoded streams Te transmitted by the network 21 respectively to generate one or a plurality of decoded images Td.

The moving image display device 41 displays all of or part of the one or the plurality of decoded images Td generated by the moving image decoding device 31. The moving image display device 41 includes, for example, display apparatuses such as a liquid crystal display, an organic electro-luminescence (EL) display, etc. The display may be in the form of, for example, a stationary display, a mobile display, an HMD, etc. In addition, when the moving image decoding device 31 has high processing capabilities, an image having high image quality is displayed, and when the moving image decoding device 31 has only relatively low processing capabilities, an image not requiring high processing capabilities and high display capabilities is displayed.

<Operator>

The operators used in this specification are described below.

>> denotes right-shift; << denotes left-shift; & denotes bitwise AND; | denotes bitwise OR; |= denotes an OR assignment operator; ‖ denotes logical sum.
x?y:z is a ternary operator in which y is taken when x is true (other than 0) and z is taken when x is false (0).
Clip3(a, b, c) is a function for clipping c to a value equal to or greater than a and equal to or less than b, and returning a if c < a, returning b if c > b, and returning c otherwise (where a <= b).
abs(a) is a function for returning the absolute value of a.
Int(a) is a function for returning the integer value of a.
floor(a) is a function for returning the greatest integer equal to or less than a.
ceil(a) is a function for returning the greatest integer equal to or greater than a.
a/d denotes division of a by d (chop off decimal).

<Structure of the encoded stream Te>

Prior to detailed description of the moving image encoding device 11 and the moving image decoding device 31 according to this embodiment, a data structure of the encoded stream Te generated by the moving image encoding device 11 and decoded by the moving image decoding device 31 is described.

FIG. 4 is a diagram showing a hierarchical structure of data in the encoded stream Te. The encoded stream Te exemplarily includes a sequence and a plurality of pictures forming the sequence. Parts (a)-(f) in FIG.4 are diagrams respectively illustrating an encoding video sequence of a default sequence SEQ, an encoding picture defining a picture PICT, an encoding slice defining a slice S, encoding slice data defining slice data, a coding tree unit included in the encoding slice data, and a coding unit included in the coding tree unit.

(Encoding video sequence)

In the encoding video sequence, a set of data to be referred to by the moving image decoding device 31 in order to decode the sequence SEQ of a processing object is defined. The sequence SEQ is shown in FIG. 4(a), and includes a video parameter set, a sequence parameter set (SPS), a picture parameter set (PPS), a picture PICT, and supplemental enhancement information (SEI).

In the video parameter set VPS, in a moving image formed by a plurality of layers, a set of encoding parameters common to a plurality of moving images, a plurality of layers included in the moving image, and a set of encoding parameters related to each of the layers are defined.

In the sequence parameter set SPS, a set of encoding parameters referred to by the moving image decoding device 31 in order to decode an object sequence are defined. For example, the width and the height of a picture are defined. It should be noted that there may be a plurality of SPSs. In this case, any one of the plurality of SPSs is selected from the PPS.

In the picture parameter set PPS, a set of encoding parameters referred to by the moving image decoding device 31 in order to decode each picture in the object sequence are defined. For example, a reference value (pic_init_qp_minus26) of a quantization width for decoding of the picture and a flag (weighted_pred_flag) for indicating application of weighted prediction are included. It should be noted that there may be a plurality of PPSs. In this case, any one of the plurality of PPSs is selected from each picture in the object sequence.

(Encoding picture)

In the encoding picture, a set of data referred to by the moving image decoding device 31 in order to decode the picture PICT of the processing object is defined. The picture PICT is shown in FIG. 4(b), and includes slice 0 to slice NS-1 (NS is the total number of slices included in the picture PICT).

It should be noted that in the following description, when there is no need to distinguish between slice 0 to slice NS-1, subscripts of the reference numerals may be omitted. In addition, other pieces of data included in the encoded stream Te and having a subscript to be described below follow the same rules.

(Encoding slice)

In the encoding slice, a set of data referred to by the moving image decoding device 31 in order to decode a slice S of the processing object is defined. The slice is shown in FIG. 4(c), and includes a slice header and slice data.

The slice header includes an encoding parameter group referred to by the moving image decoding device 31 in order to determine a decoding method of an object slice. Slice type designation information (slice type) for designating a slice type is an example of an encoding parameter included in the slice header.

Examples of slice types that can be designated by the slice type designation information include (1) I slice using only intra-frame prediction during encoding, (2) P slice using unidirectional prediction or intra-frame prediction during encoding, (3) B slice using unidirectional prediction, bidirectional prediction, or intra-frame prediction during encoding, and the like. It should be noted that the inter-frame prediction is not limited to unidirectional prediction and bidirectional prediction, and more reference pictures can be used to generate a prediction image. P slice and B slice used hereinafter refer to a slice including a block on which inter-frame prediction can be used.

It should be noted that the slice header may also include a reference (pic_parameter_set_id) to the picture parameter set PPS.

(Encoding slice data)

In the encoding slice data, a set of data referred to by the moving image decoding device 31 in order to decode slice data of the processing object is defined. The slice data is shown in FIG. 4(d), and includes a CTU. The CTU is a block of a fixed size (for example, $64 \times 64$) forming a slice, and is also referred to as a Largest Coding Unit (LCU).

(Coding tree unit)

In FIG. 4(e), a set of data referred to by the moving image decoding device 31 in order to decode the CTU of the processing object is defined. The CTU is split by recursive quad tree (QT) split, binary tree (BT) split, or ternary tree (TT) split into coding units (CUs) serving as a basic unit of encoding processing. The BT split and the TT split are collectively referred to as multi tree (MT) split. Nodes of a tree structure acquired by means of recursive quad tree split are referred to as coding nodes. Intermediate nodes of a quad tree, a binary tree, and a ternary tree are coding nodes, and the CTU itself is also defined as a highest coding node.

A CT includes the following information used as CT information: a QT split flag (split_cu_flag) for indicating whether to perform QT split, an MT split flag (split_mt_flag) for indicating whether MT split exists, an MT split direction (split_mt_dir) for indicating a splitting direction of the MT split, and an MT split type (split_mt_type) for indicating a splitting type of the MT split. split_cu_flag, split_mt_flag, split_mt_dir, and split_mt_type are transmitted for each coding node.

When split cuflag is 1, the coding node is split into four coding nodes (FIG. 5(b)).

When split cuflag is 0, if split_mt_flag is 0, the coding node is not split, and one CU is maintained as a node (FIG. 5(a)). The CU is an end node of the coding nodes, and is not subjected to further splitting. The CU is a basic unit of the encoding processing.

When split_mt_flag is 1, MT split is performed on the coding node as follows. When split_mt_type is 0, if split_mt_dir is 1, the coding node is horizontally split into two coding nodes (FIG. 5(d)); if split_mt_dir is 0, the coding node is vertically split into two coding nodes (FIG. 5(c)). Furthermore, when split_mt_type is 1, if split_mt_dir is 1, the coding node is horizontally split into three coding nodes (FIG. 5(f)); if split_mt_dir is 0, the coding node is vertically split into three coding nodes (FIG. 5(e)). These splits are illustrated in FIG. 5(g).

In addition, when the size of the CTU is 64 × 64 pixels, the size of the CU may be any one of 64 × 64 pixels, 64 × 32 pixels, 32 × 64 pixels, 32 × 32 pixels, 64 × 16 pixels, 16 × 64 pixels, 32 × 16 pixels, 16 × 32 pixels, 16 × 16 pixels, 64 × 8 pixels, 8 × 64 pixels, 32 × 8 pixels, 8 × 32 pixels, 16 × 8 pixels, 8 × 16 pixels, 8 × 8 pixels, 64 × 4 pixels, 4 × 64 pixels, 32 × 4 pixels, 4 × 32 pixels, 16 × 4 pixels, 4 × 16 pixels, 8 × 4 pixels, 4 × 8 pixels, and 4 × 4 pixels.

The CTU consists of a luma block and a chroma block. In addition, split trees representing a split structure of the CTU include a DUAL tree (separate tree) using two independent split trees for luma and chroma and a SINGLE tree using a common split tree for luma and chroma. Conventionally, in the SINGLE tree, CU splitting regarding luma and CU splitting regarding chroma are linked. In other words, in a 4:2:0 format, the chroma block is split into blocks having the same shape as the luma block and having a size of 1/2 in both a horizontal direction and a vertical direction. In a 4:2:2 format, the chroma block and the luma block are split into blocks having a size of 1/2 in the horizontal direction and having the same size in the vertical direction.

(Coding unit)

As shown in FIG. 4(f), a set of data referred to by the moving image decoding device 31 in order to decode the coding unit of the processing object is defined. Specifically, the CU consists of a CU header CUH, prediction parameters, transform parameters, quantization and transform coefficients, etc. In the CU header, a prediction mode and the like are defined.

Prediction processing may be performed for each CU, and may be performed for each sub-CU acquired by further splitting the CU. When the CU and the sub-CU have the same size, one sub-CU is included in the CU. When the CU has a size larger than the size of the sub-CU, the CU is split into sub-CUs. For example, when the CU is 8 × 8 and the sub-CU is 4 × 4, the CU is split into four sub-CUs, including two horizontal splits and two vertical splits.

Prediction types (prediction modes) include intra-frame prediction and inter-frame prediction. The intra-frame prediction is prediction in the same picture, and the inter-frame prediction refers to prediction processing performed between mutually different pictures (for example, between display time points or between layer images).

Processing in a transform/quantization portion is performed for each CU, but the quantization and transform coefficient may also be subjected to entropy encoding for each sub-block of 4 × 4 and the like.

(Prediction parameters)

The prediction image is derived by prediction parameters associated with the block. The prediction parameters include prediction parameters for the intra-frame prediction and the inter-frame prediction.

(Components of the moving image decoding device)

Components of the moving image decoding device 31 (FIG. 6) according to this embodiment are described.

The components of the moving image decoding device 31 include: an entropy decoding portion 301, a parameter decoding portion (prediction image decoding device) 302, a loop filter 305, a reference picture memory 306, a prediction parameter memory 307, a prediction image generation portion (prediction image generation device) 308, an inverse quantization/inverse transform portion 311, and an addition portion 312. It should be noted that according to the moving image encoding device 11 described below, the moving image decoding device 31 may not include the loop filter 305.

The parameter decoding portion 302 further includes a header decoding portion 3020, a CT information decoding portion 3021, and a CU decoding portion 3022 (prediction mode decoding portion), and the CU decoding portion 3022 further includes a TU decoding portion 3024. The above components can also be collectively referred to as a decoding module. The header decoding portion 3020 decodes parameter set information such as the VPS, the SPS, and the PPS and the slice header (slice information) from the encoded data. The CT information decoding portion 3021 decodes the CT from the encoded data. The CU decoding portion 3022 decodes the CU from the encoded data. When the TU includes the prediction error, the TU decoding portion 3024 decodes QP update information (quantization correction value) and a quantization prediction error (residual_coding) from the encoded data.

In addition, the parameter decoding portion 302 is configured to include an inter-frame prediction parameter decoding portion 303 and an intra-frame prediction parameter decoding portion 304 not shown in the figure. The prediction image generation portion 308 is configured to include an inter-frame prediction image generation portion 309 and an intra-frame prediction image generation portion 310.

In addition, an example in which the CTU and the CU are used as processing units is described below; however, the processing is not limited thereto, and processing may also be performed in units of sub-CUs. Alternatively, the CTU and the CU may be replaced with blocks, and the sub-CU may be replaced with a sub-block; processing may be performed in units of blocks or sub-blocks.

The entropy decoding portion 301 performs entropy decoding on an encoded stream Te inputted from the external, separates each code (syntax element), and performs decoding. Entropy encoding schemes include: a scheme in which a context (probability model) appropriately selected according to a type of a syntax element and surrounding conditions is used to perform variable length encoding on the syntax element; and a scheme in which a predetermined table or calculation formula is used to perform variable length encoding on a syntax element. In the first scheme, Context Adaptive Binary Arithmetic Coding (CABAC) stores, in a memory, a probability model updated for each encoded or decoded picture (slice). Then, in an initial state of a context of a picture P or a picture B, according to the probability model stored in the memory, a probability model is set for pictures using the same slice type and the same slice-level quantization parameter. This initial state is used for encoding and decoding processing. A separated code includes prediction information for generating a prediction image, a prediction error for generating a difference image, and the like.

The entropy decoding portion 301 outputs the separated code to the parameter decoding portion 302. The separated code is, for example, a prediction mode predMode (pred_mode_flag), a merge flag merge flag, a merge index merge_idx, an inter-frame prediction identifier inter_pred_idc, a reference picture index refIdxLX, a prediction vector index mvp_LX_idx, a difference vector mvdLX, etc. Control of which code to decode is performed on the basis of an instruction of the parameter decoding portion 302.

(Basic flow)

FIG. 7 is a flowchart illustrating schematic operation of the moving image decoding device 31.

(S1100, parameter set information decoding) The header decoding portion 3020 decodes parameter set information such as the VPS, the SPS, and the PPS from the encoded data.

(S1200, slice information decoding) The header decoding portion 3020 decodes the slice header (slice information) from the encoded data.

Hereinafter, the moving image decoding device 31 derives a decoded image of each CTU by repeatedly performing S1300 to S5000 on each CTU included in an object picture.

(S1300, CTU information decoding) The CT information decoding portion 3021 decodes the CTU from the encoded data.

(S1400, CT information decoding) The CT information decoding portion 3021 decodes the CT from the encoded data.

(S1500, CU decoding) The CU decoding portion 3022 executes S1510 and S1520, and decodes the CU from the encoded data.

(S1510, CU information decoding) The CU decoding portion 3022 decodes CU information, splitting information, prediction information, a TU split flag split_transform_flag, CU residual flags cbf_cb, cbf_cr, cbf_luma, etc., from the encoded data. In addition, the splitting information is information specifying the structure of the split tree of the luma block and the chroma block.

(S1520, TU information decoding) When a TU includes a prediction error, the TU decoding portion 3024 decodes QP update information (quantization correction value) and a quantization prediction error (residual_coding) from the encoded data. It should be noted that the QP update information is a difference value from a quantization parameter predicted value qPpred serving as a predicted value of a quantization parameter QP.

(S2000, prediction image generation) The prediction image generation portion 308 generates, on the basis of the splitting information and the prediction information decoded by the parameter decoding portion 302, a prediction image for each block included in an object CU.

(S3000, inverse quantization/inverse transform portion) The inverse quantization/inverse transform portion 311 performs inverse quantization/inverse transform portion processing for each TU included in the object CU.

(S4000, decoded image generation) The adder 312 generates a decoded image of the object CU by adding the prediction image provided by the prediction image generation portion 308 and the prediction error provided by the inverse quantization/inverse transform portion 311.

(S5000, loop filtering) The loop filter 305 performs loop filtering such as de-blocking filtering, SAO, ALF, etc. on the decoded image to generate a decoded image.

(Processing of CT information decoding)

Processing of CT information decoding is described below with reference to FIG. 8, FIG. 9, and FIG. 10. FIG. 8 is a flowchart illustrating operation of the CT information decoding portion 3021 according to an embodiment of the present invention. In addition, FIG. 9 is a diagram showing an example of configurations of a syntax table of CTU information and QT information according to an embodiment of the present invention, and FIG. 10 is a diagram showing an example of configurations of a syntax table of MT splitting information according to an embodiment of the present invention.

The CT information decoding portion 3021 decodes the CT information from the encoded data, and recursively decodes the coding tree CT (coding_quadtree). Specifically, the CT information decoding portion 3021 decodes the QT information, and decodes an object CT coding_quadtree (x0, y0, log2CbSize, cqtDepth). It should be noted that (x0, y0) are upper-left coordinates of the object CT, log2CbSize is the logarithm to the base of a CT size 2 serving as the size of the CT, that is, log2CbSize is a logarithmic CT size, and cqtDepth is a CT depth (QT depth) indicating a hierarchical structure of the CT.

(S1411) The CT information decoding portion 3021 determines whether the decoded CT information has a QT split flag. If so, then S1421 is performed, and otherwise S1422 is performed.

(S1421) If it is determined that the logarithmic CT size log2CbSize is greater than MinCbLog2SizeY, then the CT information decoding portion 3021 decodes the QT split flag (split_cu_flag).

(S1422) Otherwise, the CT information decoding portion 3021 skips decoding of the QT split flag split_cu_flag from the encoded data, and sets the QT split flag split_cu_flag to be 0.

(S1450) If the QT split flag split cuflag is not 0, then S1451 is performed, and otherwise S1471 is performed.

(S1451) The CT information decoding portion 3021 performs QT split. Specifically, the CT information decoding portion 3021 decodes, in positions (x0, y0), (x1, y0), (x0, y1), and (x1, y1) corresponding to the CT depth cqtDepth + 1, four CTs having a logarithmic CT size log2CbSize - 1.

```
coding_quadtree (x0, y0, log2CbSize - 1, cqtDepth + 1)
coding_quadtree (x1, y0, log2CbSize - 1, cqtDepth + 1)
coding_quadtree (x0, y1, log2CbSize - 1, cqtDepth + 1)
coding_quadtree (x1, y1, log2CbSize - 1, cqtDepth + 1)
```

Here, (x0, y0) are the upper-left coordinates of the object CT, and (x1, y1) is derived by adding (x0, y0) to 1/2 of the CT size (1 << log2CbSize) according to the following equations.

$$x1 = x0 + (1 << (log2CbSize - 1))$$

$$y1 = y0 + (1 << (log2CbSize - 1))$$

1 << N is the same value as the N-th power of 2 (the following observes the same rule).

In addition, the CT information decoding portion 3021 updates, according to the following equations, the CT depth cqtDepth indicating the hierarchical structure of the CT and the logarithmic CT size log2CbSize.

$$cqtDepth = cqtDepth + 1$$

$$log2CbSize = log2CbSize - 1$$

In a lower-level CT, the CT information decoding portion 3021 also uses the updated upper-left coordinates, logarithmic CT size, and CT depth to continue the QT information decoding starting from S1411.

After completion of the QT split, the CT information decoding portion 3021 decodes the CT information from the encoded data, and recursively decodes the coding tree CT (MT, coding multitree). Specifically, the CT information decoding portion 3021 decodes the MT splitting information, and decodes an object CT coding_multitree (x0, y0, cbWidth, cbHeight, mtDepth). It should be noted that cbWidth is the width of the CT, cbHeight is the height of the CT, and mtDepth is a CT depth (MT depth) indicating a hierarchical structure of the multi tree.

(S1471) The CT information decoding portion 3021 determines whether the decoded CT information has an MT split flag (splitting information). If so, then S1481 is performed. Otherwise, S1482 is performed.

(S1481) The CT information decoding portion 3021 decodes the MT split flag split_mt_flag.

(S1482) The CT information decoding portion 3021 does not decode the MT split flag split_mt_flag from the encoded data, but sets the same to be 0.

(S1490) If the MT split flag split mt flag is not 0, then the CT information decoding portion 3021 performs S1491. Otherwise, the CT information decoding portion 3021 does not split the object CT, but ends the processing (performing decoding of the CU).

(S1491) The CT information decoding portion 3021 performs MT split. The flag split_mt_dir indicating the direction of the MT split and the syntax element split mt_type indicating whether the MT split is a binary tree or a ternary tree are decoded. If the MT split type split_mt_type is 0 (split into two parts), and the MT split direction split_dir_flag is 1 (horizontal splitting), then the CT information decoding portion 3021 decodes the following two CTs (BT splitting information decoding).

coding_multitree (x0, y0, cbWidth, cbHeight / 2, mtDepth + 1)
coding_multitree (x0, y1, cbWidth, cbHeight / 2, mtDepth + 1)

On the other hand, if the MT split direction split_dir_flag is 0 (vertical splitting), then the following two CTs are decoded (BT splitting information decoding). coding_multitree (x0, y0, cbWidth / 2, cbHeight, mtDepth + 1) coding_multitree (x1, y0, cbWidth / 2, cbHeight, mtDepth + 1)

Here, (x1, y1) is derived by means of the following equations.

$$x1 = x0 + cbWidth / 2$$

$$y1 = y0 + cbHeight / 2$$

In addition, cbWidth or cbHeight is updated according to the following equations.

$$cbWidth = cbWidth / 2$$

$$cbHeight = cbHeight / 2$$

If the MT split type split_mt_type indicates 1 (split into three parts), then the CT information decoding portion 3021 decodes three CTs (TT splitting information decoding).

If the MT split direction split_dir_flag is 1 (horizontal splitting), then the following three CTs are decoded.

coding_multitree (x0, y0, cbWidth, cbHeight / 4, mtDepth + 1)
coding_multitree (x0, y1, cbWidth, cbHeight / 2, mtDepth + 1)
coding_multitree (x0, y2, cbWidth, cbHeight / 4, mtDepth + 1)

On the other hand, if the MT split direction split_dir_flag is 1 (vertical splitting), then the following three CTs are decoded (TT splitting information decoding). coding_multitree (x0, y0, cbWidth / 4, cbHeight, mtDepth + 1)

coding_multitree (x1, y0, cbWidth / 2, cbHeight, mtDepth + 1)
coding_multitree (x2, y0, cbWidth / 4, cbHeight, mtDepth + 1)

Here, (x1, y1) and (x2, y2) are derived by means of the following equations.

$$x1 = x0 + cbWidth / 4$$

$$y1 = y0 + cbHeight / 4$$

$$x2 = x0 + 3 * cbWidth / 4$$

$$y2 = y0 + 3 * cbHeight / 4$$

In a lower-level CT, the CT information decoding portion 3021 also uses the updated upper-left coordinates, width and height of the CT, and MT depth to continue the BT splitting information decoding or the TT splitting information decoding starting from S1471.

In addition, if the MT split flag split_mt_flag is 0, namely, if neither QT split nor MT split is performed, then the CT information decoding portion 3021 decodes the CU (coding_unit (x0, y0, cbWidth, cbHeight)) by means of the CU decoding portion 3022.

In addition, the parameter decoding portion 302 is configured to include an inter-frame prediction parameter decoding portion 303 and an intra-frame prediction parameter decoding portion 304 not shown in the figure. The prediction image generation portion 308 is configured to include an inter-frame prediction image generation portion 309 and an intra-frame prediction image generation portion 3021 not shown in the figure.

The loop filter 305 is a filter provided in an encoding loop, and is a filter for eliminating block distortion and ringing distortion to improve image quality. The loop filter 305 performs filtering such as de-blocking filtering, Sampling Adaptive Offset (SAO), and Adaptive Loop Filtering (ALF) on the decoded image of the CU generated by the addition portion 312.

The reference picture memory 306 stores the decoded image of the CU generated by the addition portion 312 in a predefined position for each object picture and each object CU.

The prediction parameter memory 307 stores the prediction parameters in a predefined position for the CTU or the CU of each decoded object. Specifically, the prediction parameter memory 307 stores a parameter decoded by the parameter decoding portion 302, a prediction mode predMode separated by the entropy decoding portion 301, etc.

The prediction mode predMode, the prediction parameters, etc., are inputted into the prediction image generation portion 308. In addition, the prediction image generation portion 308 reads the reference picture from the reference picture memory 306. The prediction image generation portion 308 uses, in a prediction mode indicated by the prediction mode predMode, the prediction parameters and the read reference picture (reference picture block) to generate a prediction image of the block or the sub-block. Here, the reference picture block refers to a collection (generally a rectangle, and therefore it is referred to as a block) of pixels on the reference picture, and is a region referenced for prediction image generation.

The inverse quantization/inverse transform portion 311 inversely quantizes the quantization and transform coefficient inputted from the entropy decoding portion 301 to acquire a transform coefficient. The quantization and transform coefficient is a coefficient acquired by performing frequency transform and quantization such as Discrete Cosine Transform (DCT), Discrete Sine Transform (DST), etc., on the prediction error in the encoding processing. The inverse quantization/inverse transform portion 311 performs inverse frequency transform such as inverse DCT, inverse DST, inverse KLT, etc., on the acquired transform coefficient to calculate the prediction error. The inverse quantization/inverse transform portion 311 outputs the prediction error to the addition portion 312.

The addition portion 312 adds the prediction image of the block inputted from the prediction image generation portion 308 to the prediction error inputted from the inverse quantization/inverse transform portion 311 for each pixel to generate a decoded image of the block. The addition portion 312 stores the decoded image of the block in the reference picture memory 306, and outputs the same to the loop filter 305.

(Components of the moving image encoding device)

Next, components of the moving image encoding device 11 according to this embodiment are described. FIG. 11 is a block diagram showing components of the moving image encoding device 11 according to this embodiment. The moving image encoding device 11 is configured to include: a prediction image generation portion 101, a subtraction portion 102, a transform/quantization portion 103, an inverse quantization/inverse transform portion 105, an addition portion 106, a loop filter 107, a prediction parameter memory (prediction parameter storage portion, frame memory) 108, a reference picture memory (reference image storage portion, frame memory) 109, an encoding parameter determination portion 110, a parameter encoding portion 111, and an entropy encoding portion 104.

The prediction image generation portion 101 generates a prediction image according to regions formed by splitting each picture of each image T, namely, according to the CU. The prediction image generation portion 101 performs the same action as the prediction image generation portion 308 described above, and the description therefor is omitted here.

The subtraction portion 102 subtracts a pixel value of the prediction image of the block inputted from the prediction image generation portion 101 from a pixel value of the image T to generate a prediction error. The subtraction portion 102 outputs the prediction error to the transform/quantization portion 103.

The transform/quantization portion 103 calculates a transform coefficient by performing frequency transform on the prediction error inputted from the subtraction portion 102, and derives a quantization and transform coefficient by means of quantization. The transform/quantization portion 103 outputs the quantization and transform coefficient to the entropy encoding portion 104 and the inverse quantization/inverse transform portion 105.

The inverse quantization/inverse transform portion 105 is the same as the inverse quantization/inverse transform portion 311 (FIG. 6) in the moving image decoding device 31, and therefore the description therefor is omitted here. The calculated prediction error is inputted to the addition portion 106.

In the entropy encoding portion 104, the quantization and transform coefficient is inputted from the transform/quantization portion 103, and encoding parameters are inputted from the parameter encoding portion 111. The encoding parameters include, for example, codes such as a reference picture index refIdxLX, a prediction vector index mvp_LX_idx, a difference vector mvdLX, a prediction mode predMode, a merge index merge idx, etc.

The entropy encoding portion 104 performs entropy encoding on splitting information, the prediction parameters, the quantization and transform coefficient, etc., to generate an encoded stream Te, and outputs the same.

The parameter encoding portion 111 includes a header encoding portion 1110, a CT information encoding portion 1111, a CU encoding portion 1112 (prediction mode encoding portion), an inter-frame prediction parameter encoding portion 112, and an intra-frame prediction parameter encoding portion 113 not shown in the figure. The CU encoding portion 1112 further includes a TU encoding portion 1114.

Schematic operation of each module is described below. The parameter encoding portion 111 performs encoding processing on parameters such as header information, the splitting information, prediction information, the quantization and transform coefficient, etc.

The CT information encoding portion 1111 encodes QT splitting information, MT (BT, TT) splitting information, etc., according to the encoded data.

The CU encoding portion 1112 encodes the CU information, the prediction information, a TU split flag split_transform_flag, CU residual flags cbf_cb, cbf_cr, cbf_luma, etc.

When the TU includes the prediction error, the TU encoding portion 1114 encodes QP update information (quantization correction value) and a quantization prediction error (residual_coding).

The CT information encoding portion 1111 and the CU encoding portion 1112 provide syntax elements such as the inter-frame prediction parameters (the prediction mode predMode, the merge flag merge flag, the merge index merge idx, the inter-frame prediction identifier inter_pred_idc, the reference picture index refIdxLX, the prediction vector index mvp_LX_idx, and the difference vector mvdLX), the intra-frame prediction parameters (intra_luma_mpm_flag, intra_luma_mpm_idx, intra_luma_mpm_remainder), the quantization and transform coefficient, etc., to the entropy encoding portion 104.

The addition portion 106 adds the pixel value of the prediction image of the block inputted from the prediction image generation portion 101 to the prediction error inputted from the inverse quantization/inverse transform portion 105 for each pixel so as to generate a decoded image. The addition portion 106 stores the generated decoded image in the reference picture memory 109.

The loop filter 107 performs de-blocking filtering, SAO, and ALF on the decoded image generated by the addition portion 106. It should be noted that the loop filter 107 does not necessarily include the above three filters, for example, the loop filter 107 may include only a de-blocking filter.

The prediction parameter memory 108 stores the prediction parameters generated by the encoding parameter determination portion 110 in a predefined position for each object picture and each CU.

The reference picture memory 109 stores the decoded image generated by the loop filter 107 in a predefined position for each object picture and each CU.

The encoding parameter determination portion 110 selects one of a plurality of sets of encoding parameters. The encoding parameters refer to the aforementioned QT, BT, or TT splitting information, prediction parameters, or parameters generated in association with the same and serving as encoding objects. The prediction image generation portion 101 uses these encoding parameters to generate the prediction image.

The encoding parameter determination portion 110 calculates an RD cost value denoting an information size and the encoding error for each of the plurality of sets. The RD cost value is, for example, the sum of a code quantity and a value acquired by multiplying a squared error by a coefficient $\lambda$. The code quantity is an information quantity of the encoded stream Te acquired by performing entropy encoding on a quantization error and the encoding parameters. The squared error is the sum of squares of the prediction errors calculated in the subtraction portion 102. The coefficient $\lambda$ is a real number greater than a preset zero. The encoding parameter determination portion 110 selects a set of encoding parameters having a lowest calculated cost value. Therefore, the entropy encoding portion 104 uses the selected set of encoding parameters as the encoded stream Te, and outputs the same. The encoding parameter determination portion 110 stores the determined encoding parameters in the prediction parameter memory 108.

It should be noted that a part of the moving image encoding device 11 and the moving image decoding device 31 in the above embodiment, for example, the entropy decoding portion 301, the parameter decoding portion 302, the loop filter 305, the prediction image generation portion 308, the inverse quantization/inverse transform portion 311, the addition portion 312, the prediction image generation portion 101, the subtraction portion 102, the transform/quantization portion 103, the entropy encoding portion 104, the inverse quantization/inverse transform portion 105, the loop filter 107, the encoding parameter determination portion 110, and the parameter encoding portion 111 can be implemented by means of a computer. In this case, it can be implemented by recording a program for implementing the control function in a computer-readable recording medium and causing a computer system to read and execute the program recorded in the recording medium. It should be noted that the described "computer system" refers to a computer system built in any one of the moving image encoding device 11 and the moving image decoding device 31 and including an OS and hardware such as a peripheral apparatus. In addition, the "computer-readable recording medium" refers to a removable medium such as a floppy disk, a magnetooptical disk, an ROM, and a CD-ROM and a storage device such as a hard disk built in the computer system. Moreover, the "computer-readable recording medium" may also include a recording medium for dynamically storing a program for a short time period such as a communication line used to transmit a program over a network such as the Internet or over a telecommunication line such as a telephone line, and may also include a recording medium for storing a program for a fixed time period such as a volatile memory in the computer system for functioning as a server or a client in such a case. In addition, the program described above may be a program for implementing a part of the functions described above, and may also be a program capable of implementing the functions described above in combination with a program already recorded in the computer system.

(Example 1 of prediction image generation processing)

A first example of the prediction image generation processing in the image decoding device 31 according to this embodiment is described below. The human eye is more sensitive to a change in luma than to a change in chroma. Generally, the resolution of a chroma signal is so-called 4:2:2 or 4:2:0, which is sparser than the resolution of a luma signal. However, conventionally, in the SINGLE tree, as described above, a common split tree is used for luma and chroma. Therefore, especially in the case in which a luma block is split into blocks having a relatively small size, a coding unit of a chroma block may be split to have a size smaller than the smallest size of a CU (for example, $4 \times 4$), resulting in that an overall throughput of the prediction image generation processing is reduced. An example of the image decoding device 31 for solving the aforementioned problem is described below.

In step S1510 of FIG. 7, the CU decoding portion 3022 (parameter decoding portion 302) according to this example decodes, from encoded data, CU information, splitting information of a luma block and a chroma block, prediction information referred to in prediction image generation processing performed on each split luma block, etc.

In addition, if the chroma block is split into blocks smaller than a specified block size, then the CU decoding portion 3022 decodes common prediction information for each block included in the chroma block.

In addition, the TU decoding portion 3024 decodes a prediction residual of the luma block and a prediction residual of the chroma block. If the chroma block has a relatively small size, then respective prediction residuals of a plurality of chroma blocks are aggregated and decoded.

Processing performed by the CT information decoding portion 3021, the CU decoding portion 3022, and the TU decoding portion 3024 according to this example is described.

(1) The CT information decoding portion 3021 recursively performs MTT split on a CTU, determines whether the size of the CT (cbWidth, cbHeight) is smaller than the specified block size, and determines whether a chroma merge state is not entered (IsChromaMergeRegion == 0). If it is determined that the size is smaller than the specified block size, then the chroma merge state is entered. The specified block size may be the minimum size of the chroma block, for example, a block size of the CT corresponding to $4 \times 4$ ($8 \times 8$). In addition, the specified block size may differ according to a splitting type of the CT (other constituent elements observe the same rule). For example, in quad tree split and binary tree split, the specified block size may be $8 \times 8$. In ternary tree split, the specified block size may be $16 \times 8$ or $8 \times 16$. In addition, for example, in BT split, a determination condition may be cbWidth $*$ chHeight < 64 $*$ 2; in TT split, a determination condition may be cbWidth $*$ chHeight < 64 $*$ 4; in QT split, a determination condition may be cbWidth $*$ chHeight < 64 $*$ 4.

In (2) to (4) described below, processing in the chroma merge state entered in (1) is described.

(2) If it is determined in aforementioned processing (1) that the CT size (cbWidth, cbHeight) is smaller than a specified threshold and that the chroma merge state is not entered (IsChromaMergeRegion == 0), then the CU decoding portion 3022 sets a flag IsChromaMergeRegion indicating whether the chroma merge state is entered to be a merge state (IsChromaMergeRegion = 1), initializes a flag IsPredModeFlagCoded indicating whether to decode pred_mode_flag of a prediction mode (intra-frame prediction, inter-frame prediction) to be 0, and stores upper-left coordinates (x0, y0) of the CT and the size of the CT (cbWidth, cbHeight) as variables (chromaMergeRegionTopLeftX, chromaMergeRegionTopLeftY) and (chromaMergeRegionWidth, chromaMergeRegionHeight) indicating an upper-left position and the size of a chroma merge region.

(3) The CU decoding portion 3022 decodes pred mode flag only in the first CU (or the last CU) ranked according to a decoding order among a plurality of CUs included in the CT. The first CU ranked according to the decoding order is an upper-left CU of the CT, and can be determined by means of (x0 == chromaMergeRegionTopLeftX && y0 == chromaMergeRegionTopLeftY). The last CU ranked according to the decoding order is a lower-right CU of the CT, and can be determined by means of (x0 + cbWidth == chromaMergeRegionTopLeftX + chromaMergeRegionWidth && y0 + cbHeight == chromaMergeRegionTopLeftY + chromaMergeRegionHeight).

During decoding pred_mode_flag at each split CU, as shown in FIG. 12(A), four pred_mode_flags are provided for one chroma block, and if respective values of the four pred_mode_flags are not the same, then a conflict occurs in the prediction mode of the chroma block. In addition, redundant codes reduce encoding efficiency. Therefore, as shown in FIG. 12(B), pred mode flag of the first CU ranked according to the decoding order among the plurality of luma CUs is decoded, and this pred mode flag is shared among subsequent CUs. It should be noted that the CU decoding portion 3022 may also decode pred mode flag for the last CU ranked according to the decoding order among the plurality of CUs, and share this pred_mode_flag among the remaining CUs.

(4) The CU decoding portion 3022 decodes prediction information (intra_luma_mpm_flag, intra_luma_mpm_idx, etc.) in one or more CUs included in the CT, and the TU decoding portion 3024 decodes residual information. The CU decoding portion 3022 decodes, in a chroma component, prediction information (for example, intra_chroma_pred_mode) of chroma for the first CU or the last CU ranked according to the decoding order, and the TU decoding portion 3024 decodes residual information in the position of the first CU or the last CU. Therefore, a plurality of chroma CUs can use the common prediction information.

Hereinafter, with reference to FIG. 13 to FIG. 16, supplemental description is made to the aforementioned configurations for decoding of the common prediction information performed for each block included in the chroma block. FIG. 13 is a diagram showing an example of configurations of a syntax table of a CT according to this embodiment. In addition, FIG. 14 is a diagram showing an example of configurations of a syntax table following the syntax table shown in FIG. 13. These processing operations are implemented by the CT information decoding portion 3021.

As shown in the 3rd row of the syntax table of FIG. 13, the CT information decoding portion 3021 decodes a CU split flag (split_cu_flag) indicating whether to perform CU split. Different from the example in FIG. 9, in this example, split_cu_flag indicates any one of QT split or MT split (BT split/TT split). In addition, as shown in the 7th row, a flag split_qt_flag indicating whether the CU split is QT split is decoded.

As shown in the 8th row of the syntax table of FIG. 13, it is determined whether the split tree of the object CT is a QT. If the CU split is not QT split (the CU split is MT split), then processing for rows subsequent to the 9th row is performed to decode an MT split direction (mtt_split_cu_vertical_flag) indicating a splitting direction of the MT split and an MT split type (mtt_split_cu_binary_flag) indicating a splitting type of the MT split. split_cu_flag, split_qt_flag, mtt_split_cu_vertical_flag, and mtt_split_cu_binary_flag are transmitted for each coding node.

Processing in the 13th row and the 32th row corresponds to aforementioned (1), and is a condition for determining whether to transfer to the chroma merge region in the object CT. If this condition is met, then the chroma merge state is entered. In the determination, it is determined whether the CT has a size corresponding to the specified block size. For example, the condition "(cbWidth * cbHeight / 2) < 64" set forth in the 13th row indicates the determination of whether the size of the CT split into two parts is smaller than 64.

Processing in the 14th to 20th rows and the 33th to 38th rows corresponds to configurations in aforementioned (2). When the chroma merge state is entered, as shown in the 14th and 15th rows and in the 33th and 34th rows, IsChromaMergeRegion is set to be 1, and the flag IsPredModeFlagCoded indicating whether to decode pred_mode_flag is initialized to be 0. In addition, in the 16th to 19th rows and the 35th to 38th rows, etc., the upper-left coordinates and the size (width, height) of the CT are stored as chromaMergeRegionTopLeftX, chromaMergeRegionTopLeftY, chromaMergeRegionWidth, and chromaMergeRegionHeight.

In addition, if split_cu_flag is 1, in other words, if the conditional expression in the 5th row is true, as shown in the 27th to 29th rows and the 42th to 48th rows, etc., then MTT split is performed recursively; otherwise, splitting is ended as shown in the 51th row, and processing for the CU is performed.

FIG. 15 is a diagram showing an example of configurations of a syntax table of a CU according to this embodiment. These processing operations are implemented by the CU decoding portion 3022. The processing in the 3rd row of FIG. 15 is the determination indicating whether the split tree serving as the object is a separate tree (DUAL tree) for chroma. Processing in the 6th to 10th rows corresponds to aforementioned (3). The processing in the 6th row determines whether the block is the first block ranked according to the decoding order among the blocks of the object (IsPredModeFlagCoded == 1) or the case to be a case other than the case in which the chroma merge state is entered (IsChromaMergeRegion == 0), if so, pred_mode_flag is decoded according to the 7th to 9th rows. A decoded mode is stored as PredModeFlagInfer. Then, IsPredModeFlagCoded is set to be 1, and the processing is set to be not performed for blocks subsequent to the second block ranked according to the decoding order.

The processing in the 12th to 15th rows is another configuration example (alternative processing) of the processing in the 6th to 10th rows. That is, the processing of any one of the two is performed. The processing in the 12th row determines whether the case is a case other than the case in which the chroma merge state is entered or whether the object CU is the upper-left CU of the CT in the chroma merge region. In the 12th row, it is determined whether the upper-left coordinates (x0, y0) of the object CU are equal to the upper-left coordinates (chromaMergeRegionTopLeftX, chromaMergeRegionTopLeftY) of the CT stored in (2) as a time point when the chroma merge state is entered. In a state other than the chroma merge state, or if the upper-left coordinates are consistent with the upper-left coordinates of the CT in the chroma merge region, then pred_mode_flag is decoded, and the decoded mode is stored as PredModeFlagInfer.

In addition, processing in the 29th row and the 30th row corresponds to configurations in aforementioned (4). Specifically, if the object is a single tree, and the object is in a state other than the chroma merge state (IsChromaMergeRegion == 0), or the object is the last CU ranked according to the decoding order among the plurality of CUs included in the CT in the chroma merge state, or the object is a chroma tree of a DUAL tree, then the prediction information for chroma is decoded. It should be noted that the processing in the 29th row may also use the determination on the first CU ranked in the decoding order (x0 == chromaMergeReionTopLeftX && y0 == chromaMergeRegionTopLeftY) to replace the determination on the last CU ranked in the decoding order (x0 + cbWidth == chromaMergeReionTopLeftX + chromaRegionWidth && y0 + cbHeight == chromaMergeRegionTopLeftY + chromaRegionHeight).

FIG. 16 is a diagram showing an example of configurations of a syntax table of a TU according to this embodiment. These processing operations are implemented by the TU decoding portion 3024. The processing in the 4th row to the 7th row and the processing in the 19th row to the 24th row of the syntax table of FIG. 16 correspond to the decoding processing for the residual information of the chroma block in aforementioned (4). In the processing in the 4th row to the 7th row, a chroma residual flag (tu_cbf_cb, tu_cbf_cb) is decoded only in the lower-right CU of the chroma merge region. If the determination in the 4th row is false, then the residual flag is set to be 0. In addition, in the processing in the 19th row to the 24th row, a residual of chroma of the entire chroma merge region is decoded. It should be noted that the processing in the 4th row and the 19th row is processing for determining the last (lower-right) CU of the chroma merge region, but may also be processing for determining the first (upper-left) CU of the chroma merge region.

As described above, the image decoding device 31 according to this example includes: a parameter decoding portion 302, decoding splitting information about splitting performed by means of a common tree structure on a luma block and a chroma block and prediction information that is referred to in generation processing in which a prediction image of each block acquired by means of splitting is generated; and a prediction image generation portion 308, generating, referring to the splitting information and the prediction information decoded by the parameter decoding portion 302, a prediction image related to each luma block and each chroma block, wherein if the chroma block is split into blocks having a size smaller than the specified block size, then the parameter decoding portion 302 decodes common prediction information for each block included in the chroma block. According to the aforementioned configurations, the performance of prediction image generation processing in the image decoding device 31 can be improved.

(Example 2 of prediction image generation processing)

A second example of the prediction image generation processing in the image decoding device 31 according to this embodiment is described below. It should be noted that for simplicity of description, the configurations already described in the aforementioned example are not repeatedly described. In this example, in order to prevent splitting performed on a chroma block from resulting in that a block size of the chroma block is smaller than the minimum size of a CU, for the case in which the block size is equal to or smaller than a specified size, a separate tree is used in a luma block and the chroma block, and the description for this configuration is provided. Therefore, if a CT has a size equal to or larger than the specified size, then a single tree applying the same splitting to luma and chroma is used, and if the CT has a size smaller than the specified size, then a separate tree (DUAL tree) applying different splitting to luma and chroma is used. The single tree is used for the case in which the size of the CT is larger than the specified size, and therefore a common motion vector can be applied to the luma block and the chroma block. Therefore, a motion vector of the chroma block does not need to be separately encoded, and therefore the encoding efficiency is high.

In step S1510 of FIG. 7, the CU decoding portion 3022 (parameter decoding portion 302) according to this example decodes splitting information of an upper-level tree structure that is identical in the luma block and the chroma block and a lower-level tree structure that is different in the luma block and in the chroma block; and prediction information needed by prediction image generation processing for each split block, etc.

Processing performed by the CU decoding portion 3022 and the TU decoding portion 3024 according to this example is described. It should be noted that the processing in (1) to (3) and (4) is the same as the processing in (example 1 of prediction image generation processing), and the description therefor is omitted. It should be noted that the following processing (5) is performed between (3) and (4).

(5) At the time point when the chroma merge state is entered, the CU decoding portion 3022 sets a split tree type treeType to be a luma tree (DUAL_TREE_LUMA) of the separate tree. In addition, at the time point when the chroma merge state is entered, a chroma tree (DUAL_TREE_CHROMA) is also decoded. If the split tree entering a separate encoding mode is a single tree, and the value of decoded pred_mode_flag in (3) indicates intra-frame prediction, then the split tree type treeType is set to be the luma tree (DUAL_TREE_LUMA) of the separate tree. Therefore, if the object CU is in an intra-frame prediction mode, then the luma and the chroma are separately subjected to subsequent processing.

Therefore, the block size of the luma can be reduced, and the block size of the chroma can be increased.

Hereinafter, with reference to FIG. 17 to FIG. 20, supplemental description is made to the configurations for the case in which two independent split trees are used in small blocks from the middle of splitting in the luma block and the chroma block. FIG. 17, FIG. 18, and FIG. 19 are diagrams showing examples of configurations of a syntax table of the CT according to this embodiment. They show the same syntax table. FIG. 17 shows decoding of a CU split flag split_cu_flag and a QT split flag split_qt_flag of a split tree of a CT serving as the object and processing in the case in which the split tree is a BT or a TT (in the case of !split_qt_flag), and FIG. 18 shows processing in the case in which the split tree of the CT serving as the object is a QT (split_qt_flag == 1). Here, the processing in the 13th row of the syntax table of FIG. 17 corresponds to aforementioned (1); in the processing, it is determined whether the size of the CT (cbWidth, cbHeight) is smaller than a specified block size (for example, cbWidth * chHeight < 64 * 2 in BT split, cbWidth * chHeight < 64 * 4 in TT split), and it is determined whether the chroma merge state is not entered (IsChromaMergeRegion == 0). If the size of the CT is smaller than the specified block size, and the chroma merge state is not entered (IsChromaMergeRegion == 0), then the processing in the configurations in aforementioned (2) shown in the processing in the 14th to 18th rows is performed. That is, the chroma merge state is set to be 1, and an upper-left position and the size of a chroma merge region are stored. These are the same syntaxes as those in FIGs. 13 and 14 regarding (example 1 of prediction image generation processing). However, different from embodiment 1, the size of the CT may not be maintained. In addition, the same applies to the case in which the split tree of the CT is a QT (FIG. 18). Here, if the size of the CT (cbWidth, cbHeight) is smaller than the specified block size (for example, cbWidth ∗ chHeight < 64 * 4 in QT split), and the chroma merge state is not entered (IsChromaMergeRegion == 0), then the chroma merge state is entered, and the processing in the configurations in aforementioned (2) shown in the processing in the 12th to 15th rows is performed.

In addition, FIG. 19 shows processing of decoding of coding_unit (..., DUAL_TREE_CHROMA) of a CT serving as the chroma tree performed in the case in which the chroma merge state is entered (IsChromaMergeRegion == 1) and after the CT of the single tree is split. Here, the chroma tree is called at the time point when the chroma merge state is entered in aforementioned (2). In this configuration, in order to determine the time point when the chroma merge state is entered, in aforementioned (2), it is preferable to set IsChromaMergeRegion = 2 to replace IsChromaMergeRegion = 1, and if IsChromaMergeRegion == 2, then coding unit (..., DUAL_TREE_CHROMA) is called after IsChromaMergeRegion = 1 is set. That is, at the time point when the chroma merge state is entered (IsChromaMergeRegion == 2), the chroma tree is called only once at a node of the single tree. In order to perform calling only once, at a time point when the calling is performed, IsChromaMergeRegion is changed from 2 (chroma merge shift state) to 1 (chroma merge state). In addition, in the case in which split_cu_flag is 0, that is, the CT of the chroma tree may also call coding_unit (..., DUAL_TREE_CHROMA) at a node subsequent to a node coding_unit (x0, y0, cbWidth, cbHeight, partIdx, treeType) of the luma tree. In this case, different from FIG. 19, the processing of if(split_cu_flag)

```
{
 ...
}
else
{
 coding_unit (x0, y0, cbWidth, cbHeight, partIdx, treeType)
  codins_unit (x0, y0, chromaRegionWidth, chromaRegionHeight, partIdx,
  DUAL_TREE_CHROMA)
}
```

is performed. Processing in the 11th to 14th rows corresponds to the configurations in aforementioned (4). If the condition of the 12th row is met, after the CU using the luma split tree is split, then the CU using the chroma split tree is split. On the basis of this configuration, a CU size (cbWidth, cbHeight) used for processing of a luma CU may be a small CU acquired by further splitting the chroma merge region, the size of the chroma merge region (chromaRegionWidth, chromaRegionHeight) stored in aforementioned (2) is set to be cbWidth and chHeight, and the chroma separate tree is invoked. Namely, coding_unit (x0, y0, chromaRegionWidth, chromaRegionHeight, partIdx, DUAL_TREE_CHROMA).

FIG. 20 is a diagram showing an example of configurations of a syntax table of a CU according to this embodiment. Processing in the 6th to 10th rows and processing in the 12th to 15th rows in the syntax table of FIG. 20 correspond to configurations in aforementioned (3), and the processing of any one of the two is used as in embodiment 1. Processing in the 20th to 22th rows corresponds to configurations in aforementioned (5). If the condition of the 20th row is met, namely, if the prediction mode of object CU is intra-frame prediction, then a tree type of the object CU is set to be the luma tree (DUAL_TREE_LUMA) of the separate tree. It should be noted that the syntax of transform_unit is the same as that in FIG. 16, and the description therefor is omitted.

As described above, the image decoding device 31 according to this example includes: a parameter decoding portion 302, decoding the splitting information of the upper-level tree structure that is identical in the luma block and the chroma block and the lower-level tree structure that is different in the luma block and in the chroma block and the prediction information that is referred to in generation processing in which a prediction image of each split block is generated; and a prediction image generation portion 308, generating, referring to the splitting information and the prediction information decoded by the parameter decoding portion 302, a prediction image related to each luma block and each chroma block. According to the aforementioned configurations, the performance of prediction image generation processing in the image decoding device 31 can be improved.

In summary, in FIG. 18, it is determined whether the chroma merge state is 0 and whether the CT size is smaller than the specified size, and if the CT size is smaller than the specified size, this state is set to be a state in which transferring is allowed (here, IsChromaMergeRegion == 1 or 2). As shown in the syntax table of FIG. 20, if it is determined, by referring to a parameter indicating whether a block of the split object is set to be in the chroma merge region, that the block of the split object is in a state in which the block can be transferred to the chroma merge region (here, IsChromaMergeRegion != 0), then the parameter decoding portion 302 decodes a prediction mode flag in the first block ranked according to a decoding order among a plurality of blocks included in blocks of the split object, and if the prediction mode flag indicates intra-frame prediction, then a dual tree mode in which a lower-level tree structure that is different in the luma block and in the chroma block is used may also be entered. Specifically, the follow-up of the single tree can be processed as the luma tree DUAL_TREE_LUMA, and therefore as shown in FIG. 19, the chroma tree (DUAL_TREE_CHROMA) is processed. Therefore, the dual tree mode can be entered according to the information indicated by the prediction mode flag.

(Example 3 of prediction image generation processing)

A second example of the prediction image generation processing in the image decoding device 31 according to this embodiment is described below. It should be noted that for simplicity of description, the configurations already described in the aforementioned examples are not repeatedly described. In this example, in order to prevent splitting performed on a chroma block from resulting in that a block size of the chroma block is smaller than the minimum size of a CU, if the block size is equal to or smaller than a specified size, then a prediction mode pred_mode_flag is not decoded so as to prohibit intra-frame prediction. In the case in which the prediction mode pred_mode is not decoded, if a tile group is an intra-frame tile group, then the prediction mode PredMode is set to be an intra-frame mode, and if the tile group is the intra-frame tile group, then the prediction mode PredMode is set to be an inter-frame mode. For example, in the case meeting the following equation, pred mode flag is decoded.

```
   if( cu_skip_flag[ x0 ][ y0 ] = = 0 && (cbWidth / SubWidthC * cbHeig
ht / SubHeightC) >= 16 )
    pred_mode_flag
```

Here, SubWidthC and SubHeightC indicate sampling ratios of luma and chroma, in case of 4 : 4 : 4, SubWidthC = SubHeightC = 1 indicating sampling ratios of luma and chroma; in case of 4:2:2, SubWidthC = 2, and SubHeightC = 1 indicating sampling ratios of luma and chroma; and in case of 4:2:0, SubWidthC = SubHeightC = 2. The (cbWidth / SubWidthC $*$ cbHeight / SubHeightC) corresponds to the area size of chroma.

In addition, if the prediction mode is the intra-frame prediction mode, then the image decoding device 31 according to this embodiment may use an intra-frame sub-block partition (ISP mode) indicating that only the luma of the CU is further split and the chroma of the CU is not split. Preferably, in this case, a flag intra_subpartitions_mode_flag indicating whether to use the ISP mode is decoded, and if intra_subpartitions_mode_flag is 1, then intra_subpartitions_split_flag indicating a luma splitting method for the ISP mode is decoded. The ISP mode may be a flag indicating whether to split the luma block into NumIntraSubPartitions horizontal blocks (ISP_HOR_SPLIT) or to split the luma block into NumIntraSubPartitions vertical blocks (ISP_VER_SPLIT). NumIntraSubPartitions is, for example, 2 or 4. In addition, ISP_NO_SPLIT may also be used to indicate that splitting is not performed. In addition, the ISP mode may also be a mode in which the luma block is split into two blocks in a horizontal direction and is split into two blocks in a vertical direction (ISP_QT_SPLIT). In addition, a mode in which the luma block is split into two blocks in the horizontal direction and is split into two blocks in the vertical direction if only the ISP mode is entered and the block size is the specified minimum block size (for example, 8 $\times$ 8) may also be included. trafoWidth and trafoHeight of the size of the split block are derived as follows.

In the case of ISP_HOR_SPLIT, the height trafoHeight of the split block is derived from the height cbHeight of the CU as follows.

$$\text{trafoWidth} = \text{cbWidth}$$

$$\text{trafoHeight} = \text{cbHeight} / \text{NumIntraSubPartitions}$$

In the case of ISP_VER_SPLIT, the width trafoWidth of the split block is derived from the width cbWidth of the CU as follows.

$$\text{trafoWidth} = \text{cbWidth} / \text{NumIntraSubPartitions}$$

$$\text{trafoHeight} = \text{cbHeight}$$

In the case of ISP_QT_SPLIT, the width trafoWidth and the height trafoHeight of the split block are derived from the width cbWidth and the height cbHeight of the CU as follows.

$$\text{trafoWidth} = \text{cbWidth} / 2$$

$$\text{trafoHeight} = \text{cbHeight}/ 2$$

In the ISP mode, the TU decoding portion 3024 decodes a quantization prediction error (residual_coding) in the luma of the split block having a size corresponding to rafoWidth and trafoHeight. For chroma, the TU decoding portion 3024 decodes a quantization prediction error (residual_coding) in the chroma of a block not having been subjected to splitting and having a size corresponding to cbWidth/SubWidthC and cbHeight/SubHeightC.

In addition, in the ISP mode, it is preferable to decode only one intra-frame prediction mode for the CU, but the intra-frame prediction mode may also be decoded by using the luma block of the split CU as a unit if only the ISP mode is entered and the block size is the specified minimum block size (for example, 8 × 8). In the intra-frame prediction mode, an MPM list serving as a list of intra-frame prediction modes may also be derived, and a flag intra_luma_mpm_flag indicating whether to use the MPM list, intra_luma_mpm_idx selected in the MPM list, and intra_luma_mpm_remainder indicating selecting one intra-frame prediction mode from REM modes among a plurality of intra-frame prediction modes other than the intra-frame prediction modes in the MPM list are decoded and derived. In addition, in the ISP mode, the intra-frame prediction mode may also be limited to only an MPM mode. In this case, only intra_luma_mpm_idx is decoded. That is, if the ISP mode is entered, then intra_luma_mpm_flag is always set to be 1, and intra_luma_mpm_remainder is not decoded. Here, the intra-frame prediction mode may be derived from both the MPM mode and the REM mode only if the ISP mode is entered and the block size is the specified minimum block size (for example, 8 × 8). That is, it is also possible that if the ISP mode is entered, and the size is a size other than the minimum size, then intra_luma_mpm_flag is set to be 1, and intra_luma_mpm_remainder is not decoded.

According to the aforementioned configurations, the chroma block in the image decoding device 31 can be prevented from becoming smaller. In addition, even if the chroma block is prohibited from becoming smaller, only the luma can also be split in the ISP mode, and therefore a reduction in the encoding efficiency can be suppressed to a minimum. Moreover, even in the ISP mode, if the block size is the minimum block size, then the encoding efficiency can also be further improved by adding a QT split mode. In addition, even in the ISP mode, if the block size is the minimum block size, then the encoding efficiency can also be further improved by using the split luma block as a unit to derive the intra-frame prediction mode.

In addition, the moving image encoding device 11 and the moving image decoding device 31 in the above embodiment may be partially or completely implemented as integrated circuits such as Large Scale Integration (LSI) circuits. The functional blocks of the moving image encoding device 11 and the moving image decoding device 31 may be individually implemented as processors, or may be partially or completely integrated into a processor. In addition, the circuit integration method is not limited to LSI, and the integrated circuits may be implemented as dedicated circuits or a general-purpose processor. In addition, with advances in semiconductor technology, a circuit integration technology with which LSI is replaced appears, and therefore an integrated circuit based on the technology may also be used.

An embodiment of the present invention has been described in detail above with reference to the accompanying drawings; however, the specific configuration is not limited to the above embodiment, and various amendments can be made to a design without departing from the scope of the gist of the present invention.

An embodiment of the present invention has been described in detail above with reference to the accompanying drawings; however, the specific configuration is not limited to the above embodiment, and various amendments can be made to a design without departing from the scope of the gist of the present invention.

(Application examples)

The moving image encoding device 11 and the moving image decoding device 31 described above can be used in a state of being mounted on various devices for transmitting, receiving, recording, and reproducing a moving image. It should be noted that the moving image may be a natural moving image captured by a video camera or the like, or may be an artificial moving image (including CG and GUI) generated by means of a computer or the like.

Firstly, with reference to FIG. 2, a description of that the moving image encoding device 11 and the moving image decoding device 31 described above can be used to transmit and receive the moving image is provided.

FIG. 2(a) is a block diagram showing components of a transmitting device PROD A equipped with the moving image encoding device 11. As shown in FIG. 2(a), the transmitting device PROD A includes: an encoding portion PROD_A1 for acquiring encoded data by encoding the moving image, a modulation portion PROD_A2 for acquiring a modulation signal by using the encoded data acquired by the encoding portion PROD_A1 to modulate a carrier, and a transmitting portion PROD_A3 for transmitting the modulation signal acquired by the modulation portion PROD_A2. The moving image encoding device 11 described above is used as the encoding portion PROD_A1.

As a source for providing the moving image inputted to the encoding portion PROD_A1, the transmitting device PROD_A may further include: a video camera PROD_A4 for capturing a moving image, a recording medium PROD_A5 on which the moving image is recorded, an input terminal PROD_A6 for inputting a moving image from the external, and an image processing portion A7 for generating or processing an image. FIG 2(a) exemplarily shows that the transmitting device PROD A includes all of these components, but a part of these components can be omitted.

It should be noted that the recording medium PROD_A5 may be a medium on which a moving image not encoded is recorded, or may be a medium on which a moving image encoded by using an encoding method for recording different from the encoding method for transmission is recorded. In the latter case, a decoding portion (not shown) for decoding, according to the encoding method for recording, the encoded data read from the recording medium PROD_A5 may be provided between the recording medium PROD_A5 and the encoding portion PROD_A1.

FIG. 2(b) is a block diagram showing components of a receiving device PROD_B equipped with the moving image decoding device 31. As shown in FIG. 2(b), the receiving device PROD B includes: a receiving portion PROD_B1 for receiving the modulation signal, a demodulation portion PROD_B2 for acquiring the encoded data by demodulating the modulation signal received by the receiving portion PROD_B1, and a decoding portion PROD_B3 for acquiring the moving image by decoding the encoded data acquired by the demodulation portion PROD_B2. The moving image decoding device 31 described above is used as the decoding portion PROD_B3.

The receiving device PROD B serves as a destination of provision of the moving image outputted by the decoding portion PROD_B3, and may further include a display PROD_B4 for displaying the moving image, a recording medium PROD_B5 for recording the moving image, and an output terminal PROD_B6 for outputting the moving image to the external. FIG. 2(b) exemplarily shows that the receiving device PROD_B includes all of these components, but a part of these components can be omitted.

It should be noted that the recording medium PROD_B5 may be a medium on which a moving image not encoded is recorded, or may be a medium on which a moving image encoded by using an encoding method for recording different from the encoding method for transmission is recorded. In the latter case, an encoding portion (not shown) for encoding, according to the encoding method for recording, the moving image acquired from the decoding portion PROD_B3 may be provided between the decoding portion PROD_B3 and the recording medium PROD_B5.

It should be noted that a transmission medium for transmitting the modulation signal may be wireless or wired. In addition, a transmission scheme for transmitting the modulation signal may be broadcasting (here, referred to a transmission scheme of which the transmission destination is not determined in advance) or communication (here, referred to a transmission scheme of which the transmission destination is determined in advance). That is, transmission of the modulation signal may be implemented by means of any one of wireless broadcasting, wired broadcasting, wireless communication, and wired communication.

For example, a broadcast station (broadcast apparatus and the like)/receiving station (television receiver and the like) of digital terrestrial broadcasting is an example of the transmitting device PROD_A/receiving device PROD_B transmitting or receiving the modulation signal by means of wireless broadcasting. In addition, a broadcast station (broadcast apparatus and the like)/receiving station (television receiver and the like) of cable television broadcasting is an example of the transmitting device PROD_A/receiving device PROD B transmitting or receiving the modulation signal by means of wired broadcasting.

In addition, a server (workstation and the like)/client (television receiver, personal computer, smart phone, and the like) using a Video On Demand (VOD) service and a moving image sharing service on the Internet is an example of the transmitting device PROD_A/receiving device PROD B transmitting or receiving the modulation signal by means of communication (generally, a wireless or wired transmission medium is used in LAN, and a wired transmission medium is used in WAN). Here, the personal computer includes a desktop PC, a laptop PC, and a tablet PC. In addition, the smart phone also includes a multifunctional mobile phone terminal.

It should be noted that the client using the moving image sharing service has a function for decoding encoded data downloaded from the server and displaying the same on a display and a function for encoding a moving image captured by a video camera and uploading the same to the server. That is, the client using the moving image sharing service functions as both the transmitting device PROD A and the receiving device PROD B.

Next, with reference to FIG. 3, a description of that the moving image encoding device 11 and the moving image decoding device 31 described above can be used to record and reproduce the moving image is provided.

FIG. 3(a) is a block diagram showing components of a recording device PROD_C equipped with the moving image encoding device 11 described above. As shown in FIG. 3(a), the recording device PROD C includes: an encoding portion PROD_C1 for acquiring encoded data by encoding the moving image and a writing portion PROD_C2 for writing the encoded data acquired by the encoding portion PROD_C1 in a recording medium PROD_M. The moving image encoding device 11 described above is used as the encoding portion PROD_C1.

It should be noted that the recording medium PROD M may be (1) a recording medium built in the recording device PROD C such as a Hard Disk Drive (HDD) and a Solid State Drive (SSD), may also be (2) a recording medium connected to the recording device PROD C such as an SD memory card and a Universal Serial Bus (USB) flash memory, and may also be (3) a recording medium loaded into a drive device (not shown) built in the recording device PROD C such as a Digital Versatile Disc (DVD, registered trademark) and a Blu-ray Disc (BD, registered trademark).

In addition, as a source for providing the moving image inputted to the encoding portion PROD C1, the recording device PROD C may further include: a video camera PROD_C3 for capturing a moving image, an input terminal PROD_C4 for inputting a moving image from the external, a receiving portion PROD_C5 for receiving a moving image, and an image processing portion PROD_C6 for generating or processing an image. FIG. 3(a) exemplarily shows that the recording device PROD C includes all of these components, but a part of these components can be omitted.

It should be noted that the receiving portion PROD_C5 can receive an un-encoded moving image, and can also receive encoded data encoded by using an encoding method for transmission different from the encoding method for recording. In the latter case, a decoding portion for transmission (not shown) for decoding the encoded data encoded by using the encoding method for transmission may be provided between the receiving portion PROD_C5 and the encoding portion PROD C1.

Examples of such recording device PROD C include: a DVD recorder, a BD recorder, a Hard Disk Drive (HDD) recorder, etc. (in this case, the input terminal PROD_C4 or the receiving portion PROD_C5 is a main source for providing the moving image). In addition, a portable video camera (in this case, the video camera PROD_C3 is the main source for providing the moving image), a personal computer (in this case, the receiving portion PROD_C5 or the image processing portion C6 is the main source for providing the moving image), and a smart phone (in this case, the video camera PROD_C3 or the receiving portion PROD_C5 is the main source for providing the moving image) are also included in the examples of such recording device PROD_C.

FIG. 3(b) is a block diagram showing components of a reproducing device PROD_D equipped with the moving image decoding device 31 described above. As shown in FIG. 3(b), the reproducing device PROD D includes: a reading portion PROD_D1 for reading the encoded data having been written in the recording medium PROD_M and a decoding portion PROD_D2 for acquiring the moving image by decoding the encoded data read by the reading portion PROD_D1. The moving image decoding device 31 described above is used as the decoding portion PROD_D2.

It should be noted that the recording medium PROD M may be (1) a recording medium built in the reproducing device PROD D such as an HDD and an SSD, may also be (2) a recording medium connected to the reproducing device PROD D such as an SD memory card and a USB flash memory, and may also be (3) a recording medium loaded into a drive device (not shown) built in the reproducing device PROD D such as a DVD and a BD.

In addition, as a destination of provision of the moving image outputted by the decoding portion PROD_D2, the reproducing device PROD D may further include: a display PROD_D3 for displaying the moving image, an output terminal PROD_D4 for outputting the moving image to the external, and a transmitting portion PROD_D5 for transmitting the moving image. FIG. 3(b) exemplarily shows that the reproducing device PROD D includes all of these components, but a part of these components can be omitted.

It should be noted that the transmitting portion PROD_D5 can transmit an un-encoded moving image, and can also transmit encoded data encoded by using an encoding method for transmission different from the encoding method for recording. In the latter case, an encoding portion (not shown) for encoding the moving image by using the encoding method for transmission may be provided between the decoding portion PROD_D2 and the transmitting portion PROD_D5.

Examples of such reproducing device PROD D include a DVD player, a BD player, an HDD player, and the like (in this case, the output terminal PROD_D4 connected to a television receiver and the like is a main destination of provision of the moving image). In addition, a television receiver (in this case, the display PROD_D3 is the main destination of provision of the moving image), a digital signage (also referred to as an electronic signage or an electronic bulletin board, and the display PROD_D3 or the transmitting portion PROD_D5 is the main destination of provision of the moving image), a desktop PC (in this case, the output terminal PROD_D4 or the transmitting portion PROD_D5 is the main destination of provision of the moving image), a laptop or tablet PC (in this case, the display PROD_D3 or the transmitting portion PROD_D5 is the main destination of provision of the moving image), a smart phone (in this case, the display PROD_D3 or the transmitting portion PROD_D5 is the main destination of provision of the moving image), and the like are also included in the examples of such reproducing device PROD D.

(Hardware implementation and software implementation)

In addition, the blocks in the moving image decoding device 31 and the moving image encoding device 11 described above may be implemented by hardware by using a logic circuit formed on an integrated circuit (IC chip), or may be implemented by software by using a Central Processing Unit (CPU).

In the latter case, the devices described above include: a CPU for executing commands of a program for implementing the functions, a Read Only Memory (ROM) for storing the program, a Random Access Memory (RAM) for loading the program, and a storage device (storage medium) such as a memory for storing the program and various data. The objective of the embodiments of the present invention can be attained by performing the following: software for implementing the functions described above, namely program code of a control program for the above devices (executable program, intermediate code program, source program), is recoded in a recording medium in a computer-readable manner, the recording medium is provided to the above devices, and the computer (or CPU or MPU) reads the program code recorded in the recording medium and executes the same.

Examples of the recording medium described above include: tapes such as a magnetic tape and a cassette tape, disks or discs including a magnetic disk such as a floppy disk (registered trademark)/hard disk and an optical disc such as a Compact Disc Read-Only Memory (CD-ROM)/Magneto-Optical (MO) disc/Mini Disc (MD)/Digital Versatile Disc (DVD, registered trademark)/CD Recordable (CD-R)/Blu-ray Disc (registered trademark), cards such as an IC card (including a memory card)/optical card, semiconductor memories such as a mask ROM/Erasable Programmable Read-Only Memory (EPROM)/Electrically Erasable and Programmable Read-Only Memory (EEPROM)/flash ROM, or logic circuits such as a Programmable logic device (PLD) and a Field Programmable Gate Array (FPGA).

In addition, the devices described above may also be configured to be connectable to a communication network and to be provided with the above program code by means of the communication network. The communication network is not specifically limited as long as the program code can be transmitted. For example, the Internet, an intranet, an extranet, a local area network (LAN), an Integrated Services Digital Network (ISDN), a value-added network (VAN), a community antenna television/cable television (CATV) communication network, a virtual private network, a telephone network, a mobile communication network, a satellite communication network, and the like can be used. In addition, transmission media forming the communication network are not limited to a specific configuration or type as long as the program code can be transmitted. For example, a wired medium such as Institute of Electrical and Electronic Engineers (IEEE) 1394, a USB, a power-line carrier, a cable TV line, a telephone line, and an Asymmetric Digital Subscriber Line (ADSL) or a wireless medium such as an infrared-ray including the Infrared Data Association (IrDA) and a remote controller, Bluetooth (registered trademark), IEEE 802.11 wireless communication, High Data Rate (HDR), near-field Communication (NFC), Digital Living Network Alliance (DLNA, registered trademark), a mobile telephone network, a satellite circuit, and a terrestrial digital broadcast network can also be used. It should be noted that the embodiments of the present invention may also be implemented in a form of a computer data signal embedded in a carrier wave in which the above program code is embodied by electronic transmission.

The embodiments of the present invention are not limited to the above embodiments, and can be variously modified within the scope of the claims. That is, embodiments acquired by combining technical solutions which are adequately modified within the scope of the claims are also included in the technical scope of the present invention.

## INDUSTRIAL APPLICABILITY

Embodiments of the present invention can be preferably applied to a moving image decoding device for decoding encoded data acquired by encoding image data and a moving image encoding device for generating encoded data acquired by encoding image data. In addition, embodiments of the present invention can be preferably applied to a data structure of the encoded data generated by the moving image encoding device and referred to by the moving image decoding device.

(Cross-reference to related application)

The present application claims priority to Japanese Patent Application No. JP 2019-043098 filed on March 8, 2019, which is incorporated herein by reference in its entirety.

REFERENCE NUMERAL LIST

| | |
|---|---|
| 31 | Image decoding device |
| 301 | Entropy decoding portion |
| 302 | Parameter decoding portion |
| 3020 | Header decoding portion |
| 303 | Inter-frame prediction parameter decoding portion |
| 304 | Intra-frame prediction parameter decoding portion |
| 308 | Prediction image generation portion |
| 309 | Inter-frame prediction image generation portion |
| 310 | Intra-frame prediction image generation portion |
| 311 | Inverse quantization/inverse transform portion |
| 312 | Addition portion |
| 11 | Image encoding device |
| 101 | Prediction image generation portion |
| 102 | Subtraction portion |
| 103 | Transform/quantization portion |
| 104 | Entropy encoding portion |
| 105 | Inverse quantization/inverse transform portion |
| 107 | Loop filter |
| 110 | Encoding parameter determination portion |
| 111 | Parameter encoding portion |
| 112 | Inter-frame prediction parameter encoding portion |
| 113 | Intra-frame prediction parameter encoding portion |
| 1110 | Header encoding portion |
| 1111 | CT information encoding portion |
| 1112 | CU encoding portion (prediction mode encoding portion) |
| 1114 | TU encoding portion |

**Claims**

**1.** An image decoding device, the image decoding device decoding a picture for each block, and the image decoding device comprising:

a parameter decoding portion, decoding information related to splitting,
wherein the parameter decoding portion determines, on the basis of the information, whether each block has a dual tree structure that is different in a luma block and in a chroma block, and decodes each block on the basis of a determination result.

**2.** The image decoding device according to claim 1, wherein
if it is determined that a current block has the dual tree structure, then during further splitting of the current block, the parameter decoding portion uses a tree structure identical to that of the current block to decode a block lower than the current block.

**3.** The image decoding device according to claim 1, wherein
the parameter decoding portion determines, according to a splitting size and a splitting method, whether each block has the dual tree structure.

**4.** The image decoding device according to claim 3, wherein
if the splitting method is QT split, and the splitting size representing the product of a width and a height is 64, then the parameter decoding portion determines that each block has the dual tree structure.

**5.** The image decoding device according to claim 3, wherein
for a 4:2:0 format, if the splitting method is BT split, and the splitting size representing the product of a width and a height is 64, then the parameter decoding portion determines whether each block has the dual tree structure.

**6.** The image decoding device according to claim 3, wherein
for a 4:2:0 format, if the splitting method is TT split, and the splitting size representing the product of a width and a height is 128, then the parameter decoding portion determines whether each block has the dual tree structure.

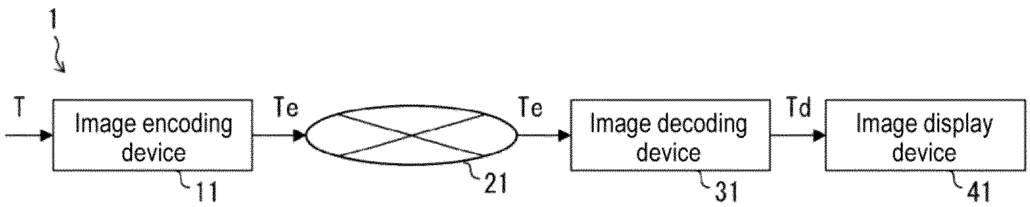
1
T
Image encoding device
Te
Te
Image decoding device
Td
Image display device
11
21
31
41

FIG. 1

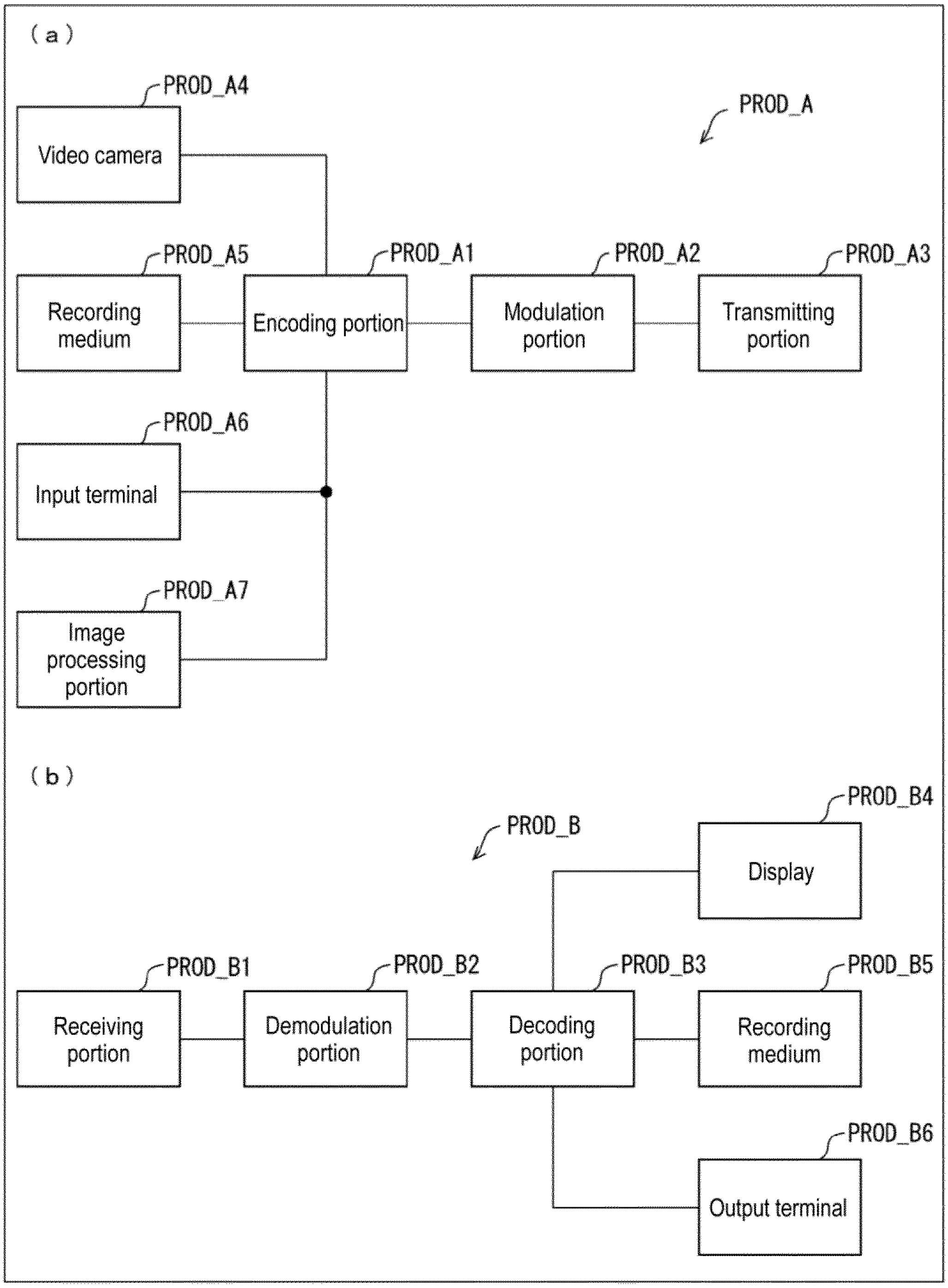
(a)
PROD_A
PROD_A4
Video camera
PROD_A5
Recording medium
PROD_A1
Encoding portion
PROD_A2
Modulation portion
PROD_A3
Transmitting portion
PROD_A6
Input terminal
PROD_A7
Image processing portion
(b)
PROD_B
PROD_B4
Display
PROD_B1
Receiving portion
PROD_B2
Demodulation portion
PROD_B3
Decoding portion
PROD_B5
Recording medium
PROD_B6
Output terminal

FIG. 2

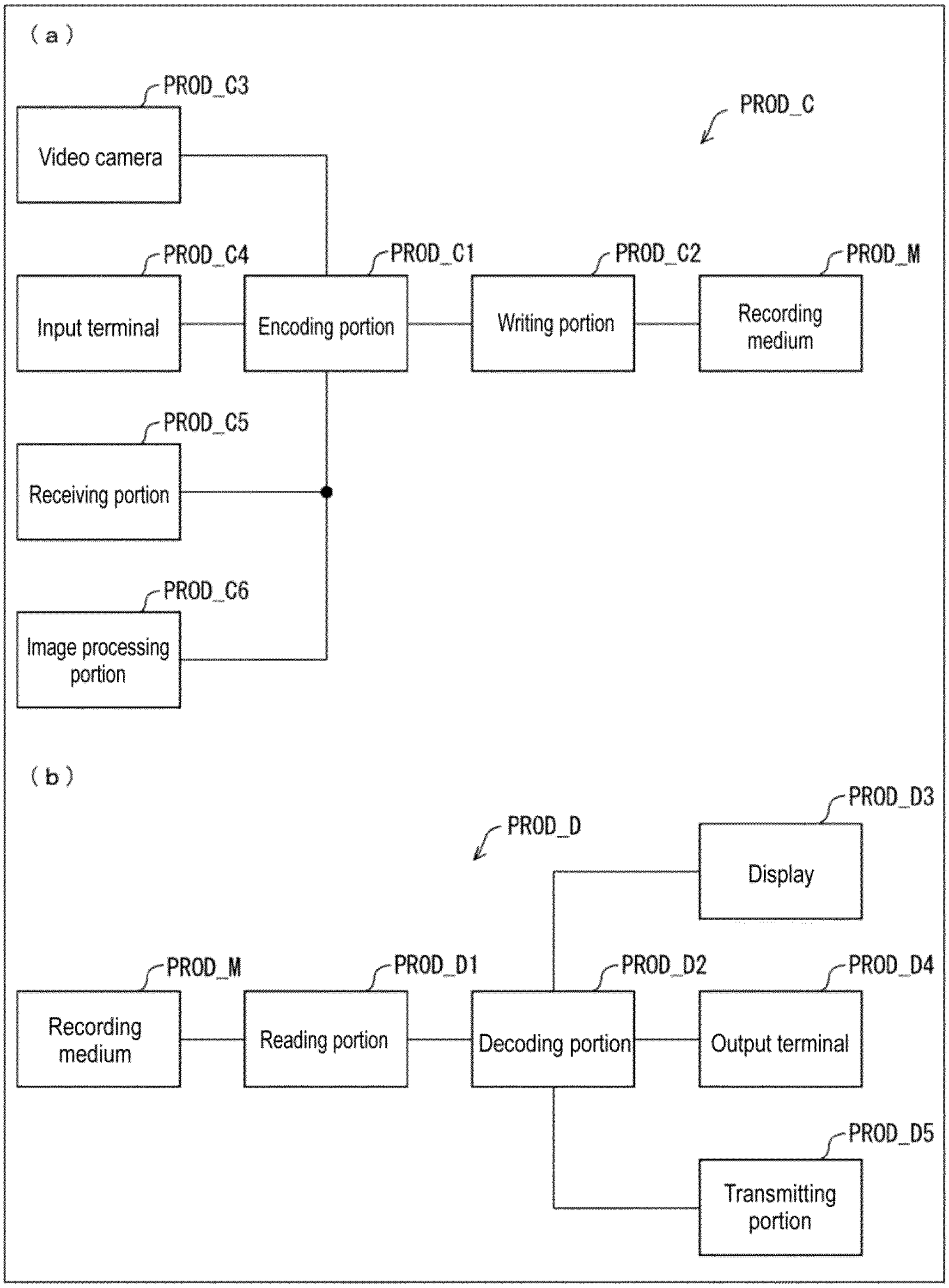
(a)
PROD_C
PROD_C3
Video camera
PROD_C4
Input terminal
PROD_C1
Encoding portion
PROD_C2
Writing portion
PROD_M
Recording medium
PROD_C5
Receiving portion
PROD_C6
Image processing portion
(b)
PROD_D
PROD_D3
Display
PROD_M
Recording medium
PROD_D1
Reading portion
PROD_D2
Decoding portion
PROD_D4
Output terminal
PROD_D5
Transmitting portion

FIG. 3

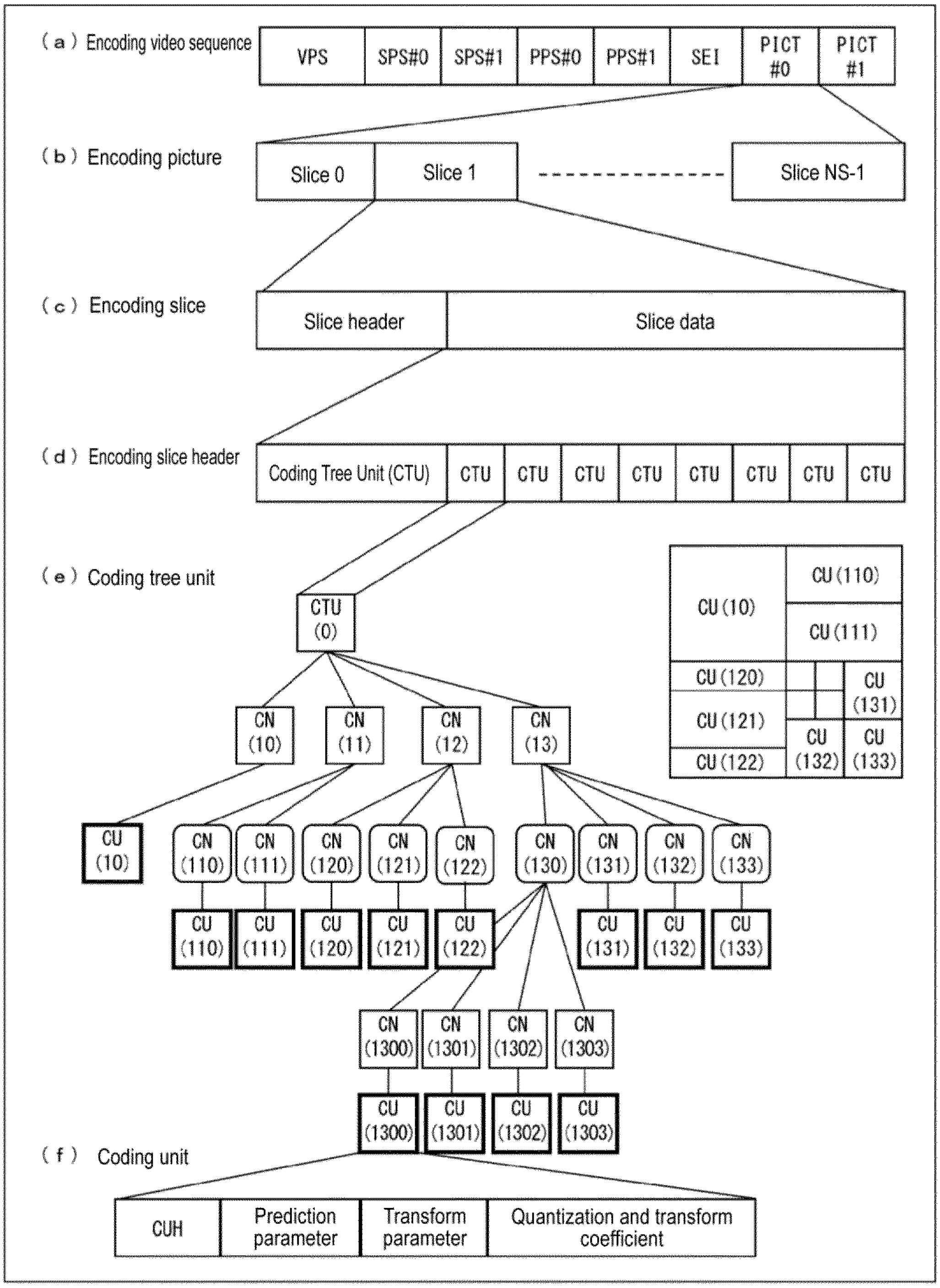
(a) Encoding video sequence
VPS
SPS#0
SPS#1
PPS#0
PPS#1
SEI
PICT #0
PICT #1
(b) Encoding picture
Slice 0
Slice 1
Slice NS-1
(c) Encoding slice
Slice header
Slice data
(d) Encoding slice header
Coding Tree Unit (CTU)
CTU
(e) Coding tree unit
CTU (0)
CN (10)
CN (11)
CN (12)
CN (13)
CU (10)
CN (110)
CN (111)
CN (120)
CN (121)
CN (122)
CN (130)
CN (131)
CN (132)
CN (133)
CU (110)
CU (111)
CU (120)
CU (121)
CU (122)
CU (131)
CU (132)
CU (133)
CN (1300)
CN (1301)
CN (1302)
CN (1303)
CU (1300)
CU (1301)
CU (1302)
CU (1303)
(f) Coding unit
CUH
Prediction parameter
Transform parameter
Quantization and transform coefficient

FIG. 4

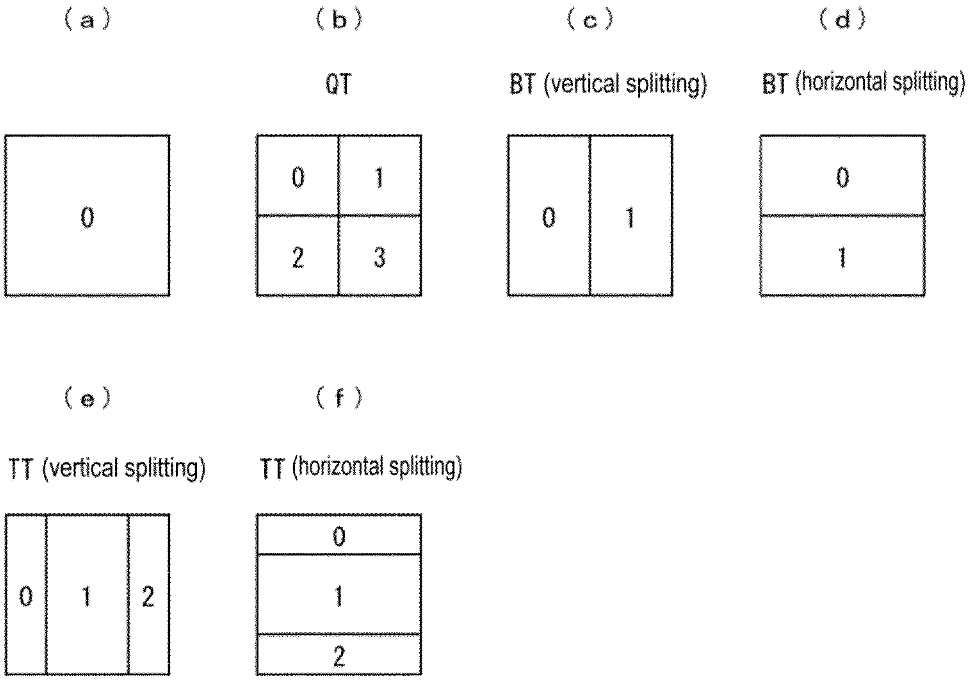


(g)

| split_cu_flag | split_mt_flag | split_mt_dir | split_mt_type | FIG. 5 |
|---|---|---|---|---|
| 1 | – | – | – | (b) |
| 0 | 0 | – | – | (a) |
| | 1 | 0 | 0 | (c) |
| | | | 1 | (e) |
| | | 1 | 0 | (d) |
| | | | 1 | (f) |

FIG. 5

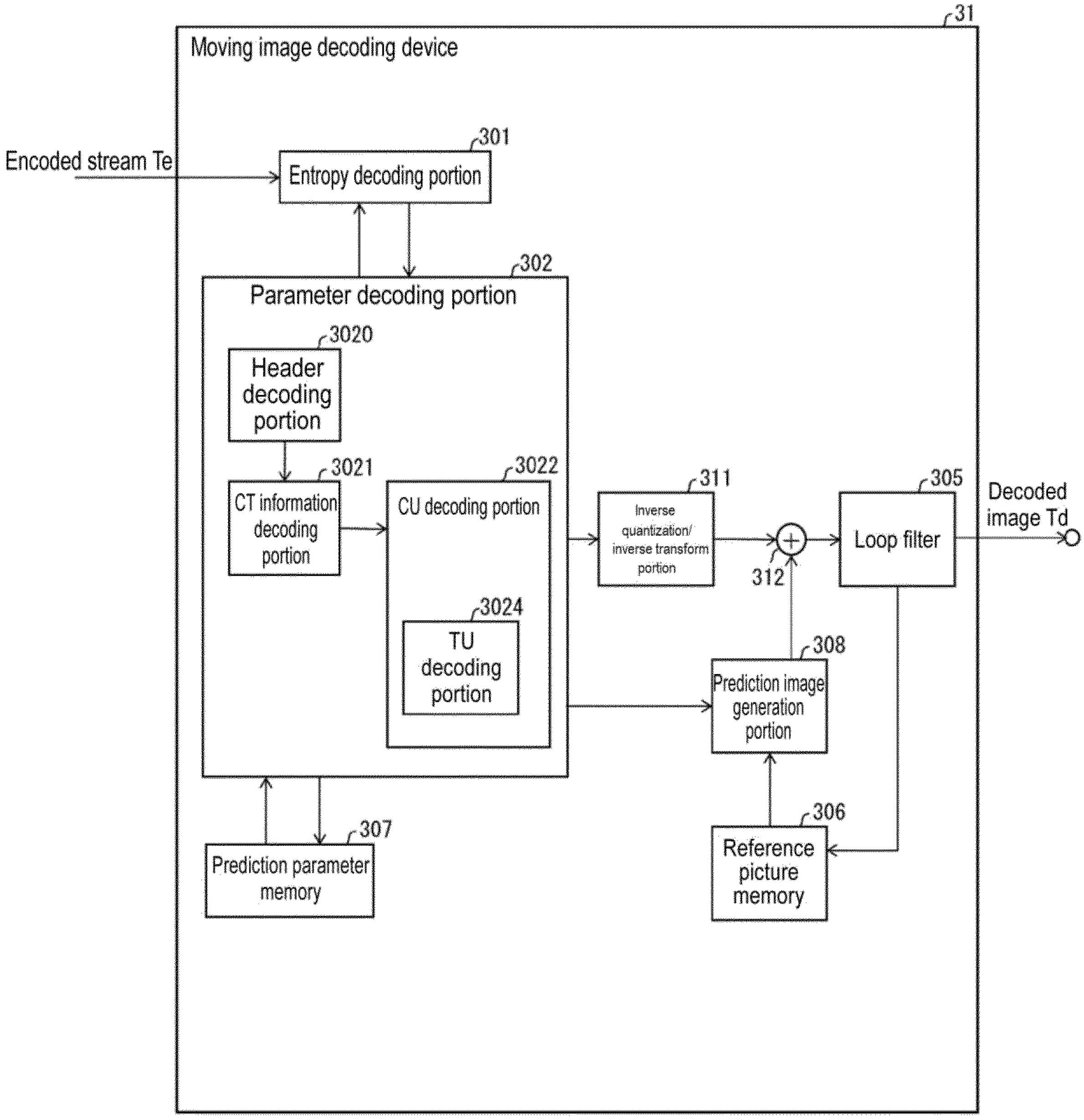
31
Moving image decoding device
Encoded stream Te
301
Entropy decoding portion
302
Parameter decoding portion
3020
Header decoding portion
3021
CT information decoding portion
3022
CU decoding portion
3024
TU decoding portion
311
Inverse quantization/ inverse transform portion
312
305
Loop filter
Decoded image Td
308
Prediction image generation portion
306
Reference picture memory
307
Prediction parameter memory

FIG. 6

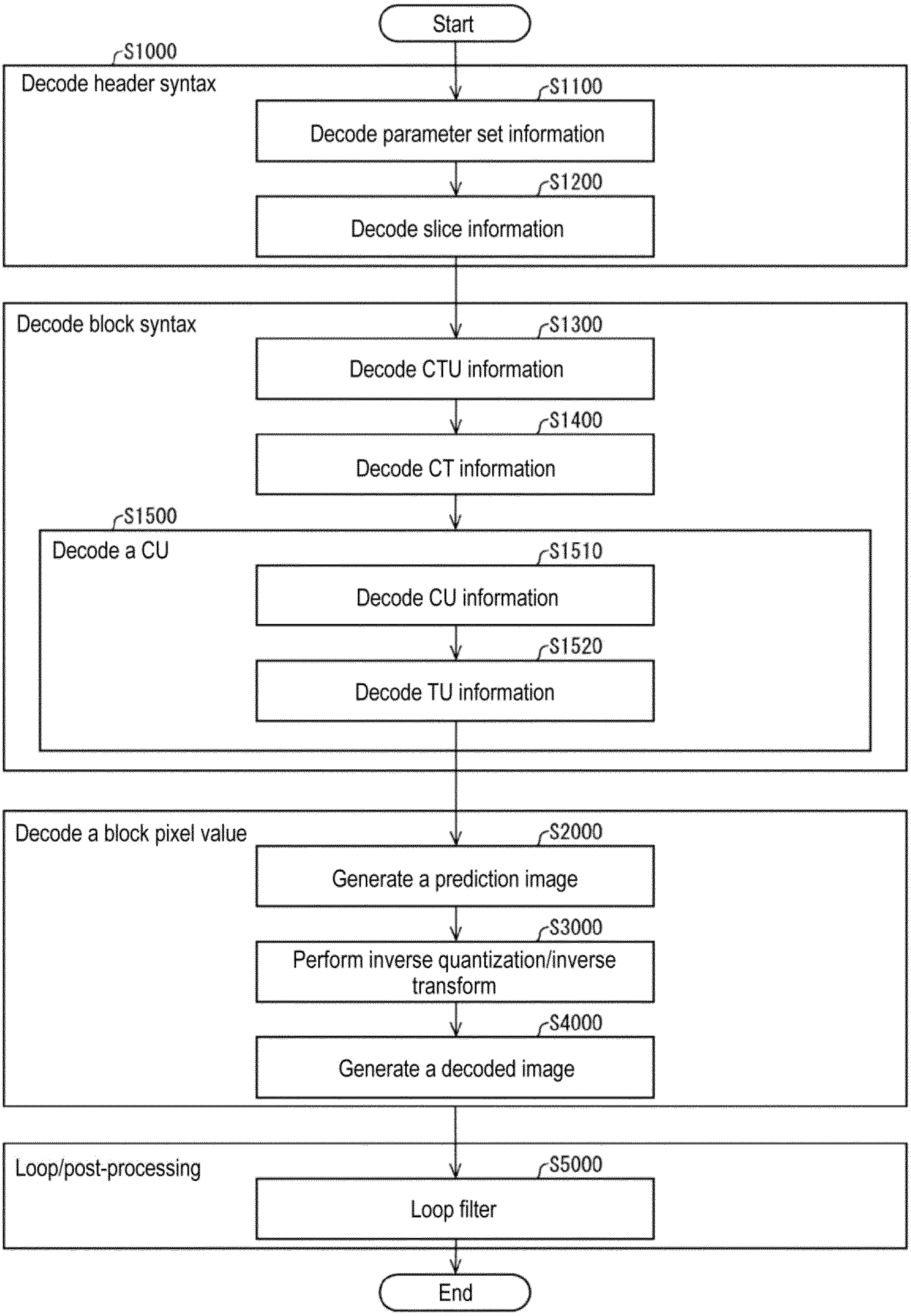
Start
S1000
Decode header syntax
S1100
Decode parameter set information
S1200
Decode slice information
Decode block syntax
S1300
Decode CTU information
S1400
Decode CT information
S1500
Decode a CU
S1510
Decode CU information
S1520
Decode TU information
Decode a block pixel value
S2000
Generate a prediction image
S3000
Perform inverse quantization/inverse transform
S4000
Generate a decoded image
Loop/post-processing
S5000
Loop filter
End

FIG. 7

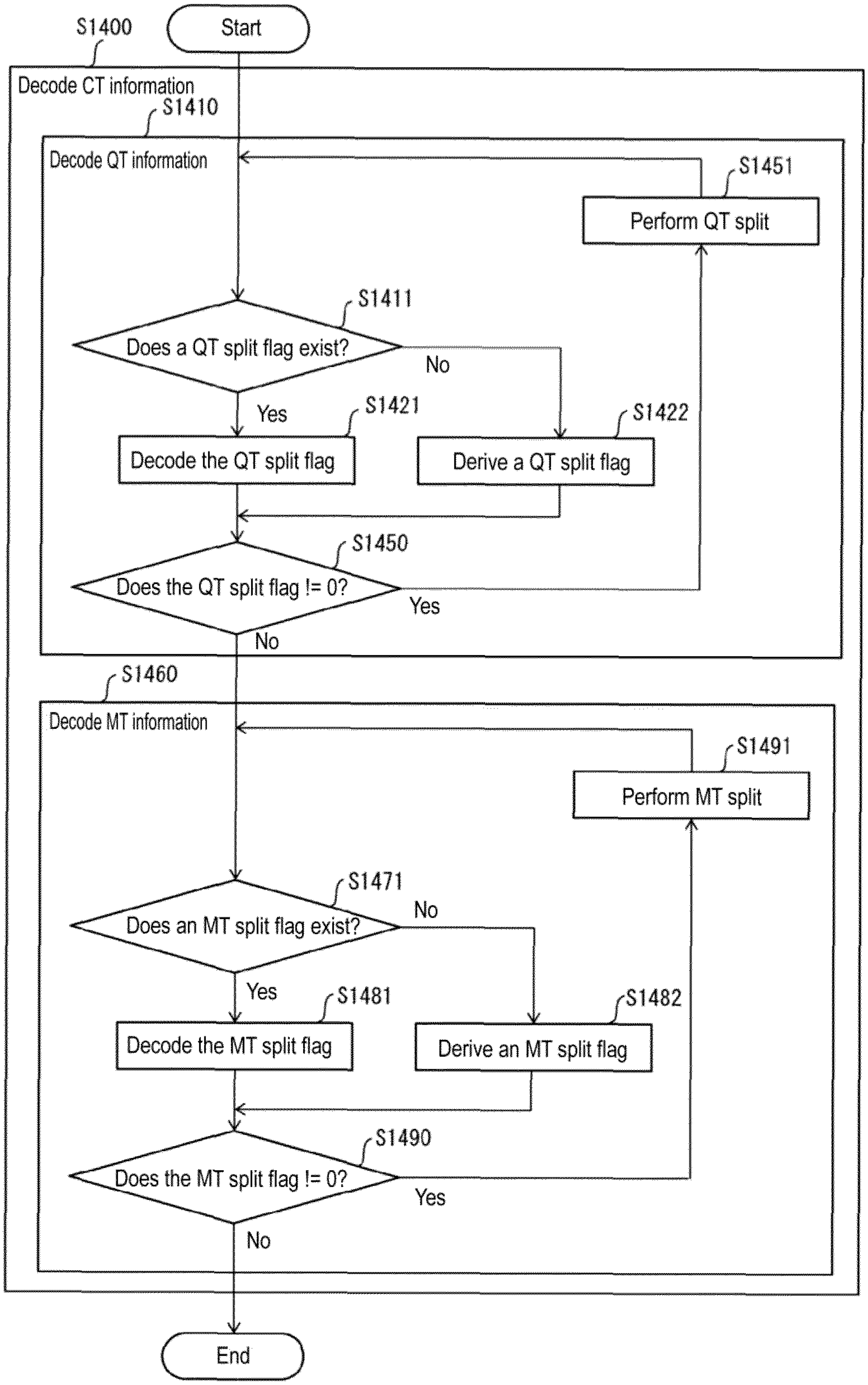
S1400
Start
Decode CT information
S1410
Decode QT information
S1451
Perform QT split
S1411
Does a QT split flag exist?
No
Yes
S1421
S1422
Decode the QT split flag
Derive a QT split flag
S1450
Does the QT split flag != 0?
Yes
No
S1460
Decode MT information
S1491
Perform MT split
S1471
No
Does an MT split flag exist?
Yes
S1481
S1482
Decode the MT split flag
Derive an MT split flag
S1490
Does the MT split flag != 0?
Yes
No
End

FIG. 8

(a)

| coding_tree_unit( ) { | Descriptor | |
|---|---|---|
| xCtb = ( CtbAddrInRs % PicWidthInCtbsY )<<CtbLog2SizeY | | |
| yCtb = ( CtbAddrInRs / PicWidthInCtbsY )<<CtbLog2SizeY | | |
| if( slice_sao_luma_flag \|\| slice_sao_chroma_flag ) | | |
| sao( xCtb >> CtbLog2SizeY, yCtb >> CtbLog2SizeY ) | | |
| coding_quadtree( xCtb, yCtb, CtbLog2SizeY, 0 ) | | ←SYN1400 |
| } | | |

(b)

| coding_quadtree( x0, y0, log2CbSize, cqtDepth ) { | Descriptor | |
|---|---|---|
| if( x0 + ( 1<<log2CbSize ) <= pic_width_in_luma_samples && y0 + ( 1<<log2CbSize ) <= pic_height_in_luma_samples && log2CbSize > MinCbLog2SizeY ) | | ←SYN1411 |
| **split_cu_flag**[ x0 ][ y0 ] | ae(v) | ←SYN1421 |
| if( split_cu_flag[ x0 ][ y0 ] ) { | | ←SYN1431 |
| x1 = x0 + ( 1<<( log2CbSize − 1 ) ) | | |
| y1 = y0 + ( 1<<( log2CbSize − 1 ) ) | | |
| coding_quadtree( x0, y0, log2CbSize − 1, cqtDepth + 1 ) | | ←SYN1451A |
| if( x1 < pic_width_in_luma_samples ) | | |
| coding_quadtree( x1, y0, log2CbSize − 1, cqtDepth + 1 ) | | ←SYN1451B |
| if( y1 < pic_height_in_luma_samples ) | | |
| coding_quadtree( x0, y1, log2CbSize − 1, cqtDepth + 1 ) | | ←SYN1451C |
| if( x1 < pic_width_in_luma_samples && y1 < pic_height_in_luma_samples ) | | |
| coding_quadtree( x1, y1, log2CbSize − 1, cqtDepth + 1 ) | | ←SYN1451D |
| } else | | |
| coding_multitree( x0, y0, 1<<log2CbSize, 1<<log2CbSize, 0 ) | | |
| } | | |

FIG. 9

| coding_multitree( x0, y0, cbWidth, cbHeight, mtDepth ) { | Descriptor |
|---|---|
| if ( ( cbHeight > minBTSize \|\| cbWidth > minBTSize ) && (cbWidth <= maxBTSize && cbHeight <= maxBTSize) && mtDepth < maxBTDepth ) | |
| **split_mt_flag** [ x0 ][ y0 ] | ae(v) |
| if (split_mt_flag) { // split | |
| if ( (cbHeight > minBTSize) && (cbWidth > minBTSize) ) | |
| **split_mt_dir** [x0][y0] | ae(v) |
| if ( (cbHeight > minTTSize) \|\| (cbWidth > minTTSize) ) | |
| **split_mt_type** [x0][y0] | ae(v) |
| if( split_mt_type[ x0 ][ y0 ] == 1 ) { // Ternary tree | |
| if( split_mt_dir[ x0 ][ y0 ] == 0 ) { // Vertical | |
| x1 = x0 + ( cbWidth/4), x2 = x0 + ( 3*cbWidth/4 ) | |
| coding_multitree( x0, y0, cbWidth/4, cbHeight, mtDepth + 1 ) | |
| if( x1 < pic_width_in_luma_samples ) | |
| coding_multitree( x1, y0, cbWidth/2, cbHeight, mtDepth + 1 ) | |
| if( x2 < pic_width_in_luma_samples ) | |
| coding_multitree( x2, y0, cbWidth/4, cbHeight, mtDepth + 1 ) | |
| } else if( split_mt_dir[ x0 ][ y0 ] == 1 ) { //Horizontal | |
| y1 = y0 + ( cbHeight/4 ) y2 = y0 + ( 3*cbHeight/4 ) | |
| coding_multitree( x0, y0, cbWidth, cbHeight/4, mtDepth + 1 ) | |
| if( y1 < pic_height_in_luma_samples ) | |
| coding_multitree( x0, y1, cbWidth, cbHeight/2, mtDepth + 1 ) | |
| if( y2 < pic_height_in_luma_samples ) | |
| coding_multitree( x0, y2, cbWidth, cbHeight/4, mtDepth + 1 ) | |
| } | |
| } else { // binary tree | |
| if( split_mt_dir[ x0 ][ y0 ] == 0 ) { // Vertical | |
| x1 = x0 + ( cbWidth/2 ) | |
| coding_multitree( x0, y0, cbWidth/2, cbHeight, mtDepth + 1 ) | |
| if( x1 < pic_width_in_luma_samples ) | |
| coding_multitree( x1, y0, cbWidth/2, cbHeight, mtDepth + 1 ) | |
| } else if( split_mt_dir[ x0 ][ y0 ] == 1 ) { // Horizontal | |
| y1 = y0 + ( cbHeight/2 ) | |
| coding_multitree( x0, y0, cbWidth, cbHeight/2, mtDepth + 1 ) | |
| if( y1 < pic_height_in_luma_samples ) | |
| coding_multitree( x0, y1, cbWidth, cbHeight/2, mtDepth + 1 ) | |
| } | |
| } | |
| } else // no split | |
| coding_unit( x0, y0, cbWidth, cbHeight ) | |
| } | |

FIG. 10

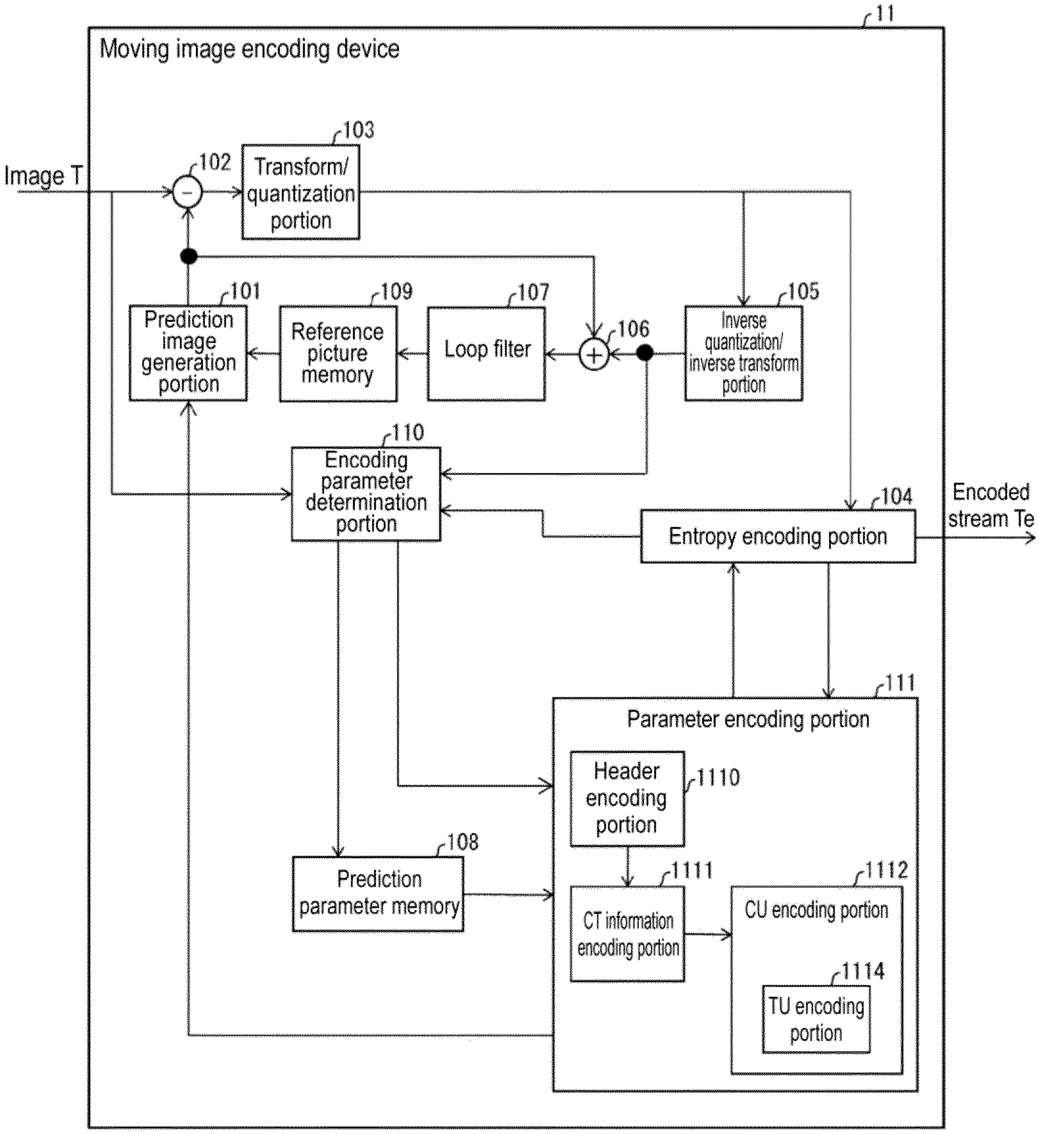
11
Moving image encoding device
Image T
102
103
Transform/ quantization portion
101
Prediction image generation portion
109
Reference picture memory
107
Loop filter
106
105
Inverse quantization/ inverse transform portion
110
Encoding parameter determination portion
104
Entropy encoding portion
Encoded stream Te
111
Parameter encoding portion
Header encoding portion
1110
1111
CT information encoding portion
1112
CU encoding portion
1114
TU encoding portion
108
Prediction parameter memory

FIG. 11

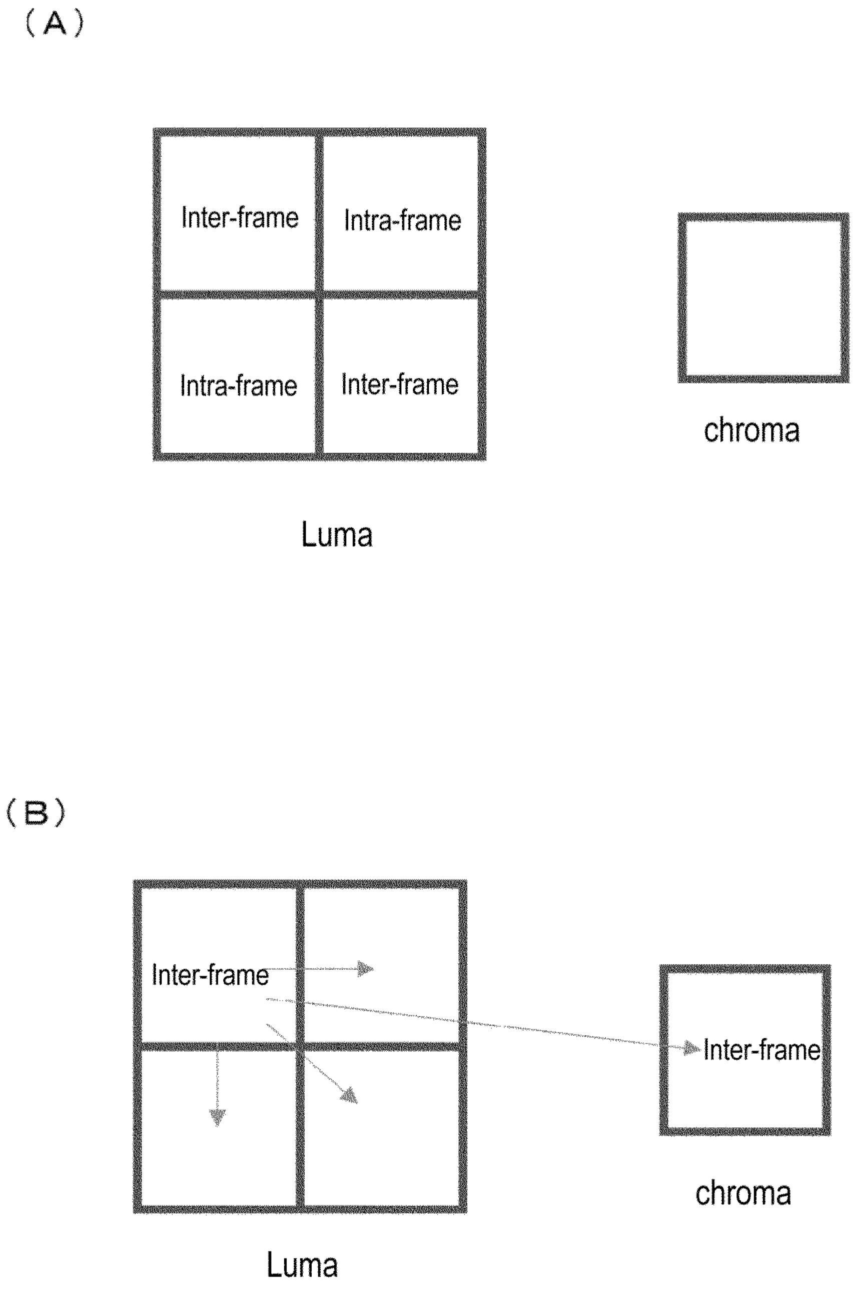
(A)
Inter-frame
Intra-frame
Intra-frame
Inter-frame
chroma
Luma
(B)
Inter-frame
Inter-frame
chroma
Luma

FIG. 12

<table>
<tr><td>1</td><td>coding_tree( x0, y0, cbWidth, cbHeight, cqtDepth, mttDepth, depthOffset, partIdx, IsChromaMergeRegion, treeType ) {</td><td>Descriptor</td><td></td></tr>
<tr><td>2</td><td>if( ( allowSplitBtVer || allowSplitBtHor || allowSplitTtVer || allowSplitTtHor || allowSplitQt ) &&<br>( x0 + cbWidth <= pic_width_in_luma_samples ) &&<br>(y0 + cbHeight <= pic_height_in_luma_samples ) )</td><td></td><td></td></tr>
<tr><td>3</td><td>split_cu_flag</td><td>ae(v)</td><td></td></tr>
<tr><td>4</td><td>...</td><td></td><td></td></tr>
<tr><td>5</td><td>if( split_cu_flag ) {</td><td></td><td></td></tr>
<tr><td>6</td><td>if( allowSplitQt && ( allowSplitBtVer || allowSplitBtHor || allowSplitTtVer || allowSplitTtHor ) )</td><td></td><td></td></tr>
<tr><td>7</td><td>split_qt_flag</td><td>ae(v)</td><td></td></tr>
<tr><td>8</td><td>if( !split_qt_flag ) {</td><td></td><td></td></tr>
<tr><td>9</td><td>if( ( allowSplitBtHor || allowSplitTtHor ) &&<br>( allowSplitBtVer || allowSplitTtVer ) )</td><td></td><td></td></tr>
<tr><td>10</td><td>mtt_split_cu_vertical_flag</td><td>ae(v)</td><td></td></tr>
<tr><td>11</td><td>if( ( allowSplitBtVer && allowSplitTtVer && mtt_split_cu_vertical_flag ) ||<br>( allowSplitBtHor && allowSplitTtHor && !mtt_split_cu_vertical_flag ) )</td><td></td><td></td></tr>
<tr><td>12</td><td>mtt_split_cu_binary_flag</td><td>ae(v)</td><td></td></tr>
<tr><td>13</td><td>if(((MttSplitMode[ x0 ][ y0 ][ mttDepth ] == SPLIT_BT_VER || MttSplitMode[ x0 ][ y0 ][ mttDepth ] == SPLIT_BT_HOR) && (cbWidth*cbHeight /2) < 64 ) || ((MttSplitMode[ x0 ][ y0 ][ mttDepth ] == SPLIT_TT_VER || MttSplitMode[ x0 ][ y0 ][ mttDepth ] == SPLIT_TT_HOR) && (cbWidth*cbHeight /4) < 64) )&& IsChromaMergeRegion == 0 && ( x0 + cbWidth) <= pic_width_in_luma_samples && ( y0 + cbHeight ) <= pic_height_in_luma_samples && treeType != DUAL_TREE_CHROMA)) {</td><td></td><td>Corresponds to (1)</td></tr>
<tr><td>14</td><td>IsChromaMergeRegion = 1</td><td></td><td rowspan="7">Corresponds to (2)</td></tr>
<tr><td>15</td><td>IsPredModeFlagCoded = 0</td><td></td></tr>
<tr><td>16</td><td>chromaMergeRegionTopLeftX = x0</td><td></td></tr>
<tr><td>17</td><td>chromaMergeRegionTopLeftY= y0</td><td></td></tr>
<tr><td>18</td><td>chromaMergeRegionWidth = cbWidth</td><td></td></tr>
<tr><td>19</td><td>chromaMergeRegionHeight = cbHeight</td><td></td></tr>
<tr><td>20</td><td>}</td><td></td></tr>
<tr><td>21</td><td>...</td><td></td><td></td></tr>
<tr><td>22</td><td>}</td><td></td><td></td></tr>
<tr><td>23</td><td>}</td><td></td><td></td></tr>
</table>

FIG. 13

```
        } else { /* SPLIT_TT_HOR */
            y1 = y0 + ( cbHeight / 4 )
            y2 = y0 + ( 3 * cbHeight / 4 )
            coding_tree( x0, y0, cbWidth, cbHeight / 4,
                          cqtDepth, mttDepth + 1, depthOffset, 0, treeType )
            coding_tree( x0, y1, cbWidth, cbHeight / 2,
                          cqtDepth, mttDepth + 1, depthOffset, 1, treeType )
            coding_tree( x0, y2, cbWidth, cbHeight / 4,
                          cqtDepth, mttDepth + 1, depthOffset, 2 , treeType)
        }
    } else {
        if (IsChromaMergeRegion == 0 && (cbWidth*cbHeight/4) < 64 && (x0 + cbWidth) <=
pic_width_in_luma_samples && (y0 + cbHeight) <= pic_height_in_luma_samples && treeType
!= DUAL_TREE_CHROMA) {                                                            } Corresponds to (1)
            IsChromaMergeRegion = 1                                               ┐
            IsPredModeFlagCoded = 0                                               │
            chromaMergeRegionTopLeftX = x0                                        ├ Corresponds to (2)
            chromaMergeRegionTopLeftY= y0                                         │
            chromaMergeRegionWidth = cbWidth                                      │
            chromaMergeRegionHeight = cbHeight                                    ┘
        }
        x1 = x0 + ( cbWidth / 2 )
        y1 = y0 + ( cbHeight / 2 )
        coding_tree( x0, y0, cbWidth / 2, cbHeight / 2, cqtDepth + 1, 0, 0, 0, treeType )
        if( x1 < pic_width_in_luma_samples )
            coding_tree( x1, y0, cbWidth / 2, cbHeight / 2, cqtDepth + 1, 0, 0, 1, treeType )
        if( y1 < pic_height_in_luma_samples )
            coding_tree( x0, y1, cbWidth / 2, cbHeight / 2, cqtDepth + 1, 0, 0, 2, treeType )
        if( y1 < pic_height_in_luma_samples && x1 < pic_width_in_luma_samples )
            coding_tree( x1, y1, cbWidth / 2, cbHeight / 2, cqtDepth + 1, 0, 0, 3, treeType )
    }
  } else
    coding_unit( x0, y0, cbWidth, cbHeight, IsChromaMergedRegion, treeType )
}
```

FIG. 14

| coding_unit( x0, y0, cbWidth, cbHeight, IsChromaMergedRegion, treeType ) { | Descriptor | |
|---|---|---|
| if( tile_group_type != I ) { | | |
| if( treeType != DUAL_TREE_CHROMA ) | | |
| **cu_skip_flag**[ x0 ][ y0 ] | ae(v) | |
| //(C): Option 1: use IsPredModeFlagCoded for determination | | Corresponds to (3) |
| if( cu_skip_flag[ x0 ][ y0 ] = = 0 && (IsPredModeFlagCoded == 0 \|\| !IsChromaMergeRegion) ) { | | |
| **pred_mode_flag** | ae(v) | |
| PredModeFlagInfer = pred_mode_flag | | |
| IsPredModeFlagCoded = 1 | | |
| } | | |
| //(C): Option 2: use chromaMergeRegion and consistency of upper-left coordinates for determination | | Corresponds to (3) |
| if( cu_skip_flag[ x0 ][ y0 ] = = 0 && (IsChromaMergeRegion == 0 \|\| x0 == chromaMergeRegtionTopLeftX && y0 == chromaMergeRegtionTopLeftY ) { | | |
| **pred_mode_flag** | ae(v) | |
| PredModeFlagInfer = pred_mode_flag | | |
| } | | |
| } | | |
| if( CuPredMode[ x0 ][ y0 ] = = MODE_INTRA ) { | | |
| ... | | |
| if( treeType = = SINGLE_TREE \|\| treeType = = DUAL_TREE_LUMA ) { | | |
| if( ( y0 % CtbSizeY ) > 0 ) | | |
| **intra_luma_ref_idx**[ x0 ][ y0 ] | ae(v) | |
| if (intra_luma_ref_idx[ x0 ][ y0 ] = = 0) | | |
| **intra_luma_mpm_flag**[ x0 ][ y0 ] | ae(v) | |
| if( intra_luma_mpm_flag[ x0 ][ y0 ] ) | | |
| **intra_luma_mpm_idx**[ x0 ][ y0 ] | ae(v) | |
| else | | |
| **intra_luma_mpm_remainder**[ x0 ][ y0 ] | ae(v) | |
| } | | Corresponds to (4) |
| if( (treeType = = SINGLE_TREE && (IsChromaMergeRegion == 0 \|\| x0 + cbWidth == chromaMergeRegtionTopLeftX + chromaRegionWidth && y0 + cbHeight == chromaMergeRegtionTopLeftY + chromaRegionHeight ) \|\| treeType = = DUAL_TREE_CHROMA ) | | |
| **intra_chroma_pred_mode**[ x0 ][ y0 ] | ae(v) | |
| ... | | |
| | | |
| | | |

FIG. 15

| | | | |
|---|---|---|---|
| 1 | transform_unit( x0, y0, tbWidth, tbHeight, treeType ) { | Descriptor | |
| 2 | if( treeType = = SINGLE_TREE \|\| treeType = = DUAL_TREE_LUMA ) | | |
| 3 | **tu_cbf_luma**[ x0 ][ y0 ] | ae(v) | |
| 4 | if( (treeType = = SINGLE_TREE \|\| treeType = = DUAL_TREE_CHROMA) && (!IsChromaMergeRegtionFlag ‖ (x0 + tbWidth == chromaMergeRegtionTopLeftX + chromaRegionWidth && y0 + tbHeight == chromaMergeRegtionTopLeftY + chromaRegionHeight ) ) ) { | | |
| 5 | **tu_cbf_cb**[ x0 ][ y0 ] | ae(v) | Corresponds to (4) |
| 6 | **tu_cbf_cr**[ x0 ][ y0 ] | ae(v) | |
| 7 | } else { | | |
| 8 | tu_cbf_cb[ x0 ][ y0 ] =0 | | |
| 9 | tu_cbf_cr[ x0 ][ y0 ] =0 | | |
| 10 | } | | |
| 11 | if( ( tu_cbf_luma[ x0 ][ y0 ] \|\| tu_cbf_cb[ x0 ][ y0 ] \|\| tu_cbf_cr[ x0 ][ y0 ] ) && treeType != DUAL_TREE_CHROMA ) { | | |
| 12 | if( cu_qp_delta_enabled_flag && !IsCuQpDeltaCoded ) { | | |
| 13 | **cu_qp_delta_abs** | ae(v) | |
| 14 | if( cu_qp_delta_abs ) | | |
| 15 | **cu_qp_delta_sign_flag** | ae(v) | |
| 16 | } | | |
| 17 | } | | |
| 18 | if( ( ( CuPredMode[ x0 ][ y0 ] = = MODE_INTRA ) && sps_mts_intra_enabled_flag ) \|\| ( ( CuPredMode[ x0 ][ y0 ] = = MODE_INTER ) && sps_mts_inter_enabled_flag ) ) && tu_cbf_luma[ x0 ][ y0 ] && treeType != DUAL_TREE_CHROMA && ( tbWidth <= 32 ) && ( tbHeight <= 32 ) ) | | |
| 19 | **tu_mts_flag**[ x0 ][ y0 ] | ae(v) | |
| 20 | if( tu_cbf_luma[ x0 ][ y0 ] ) | | |
| 21 | residual_coding( x0, y0, Log2( tbWidth ), Log2( tbHeight ), 0 ) | | |
| 22 | If (IsChromaMergeRegion && (x0 + tbWidth == chromaMergeRegtionTopLeftX + chromaRegionWidth && y0 + tbHeight == chromaMergeRegtionTopLeftY + chromaRegionHeight ) ) { | | |
| 23 | x0 = chromaMergeRegionTopLeftX | | |
| 24 | y0 = chromaMergeRegionTopLeftY | | Corresponds to (4) |
| 25 | tbWidth = chromaMergeRegtionWidth | | |
| 26 | tbHeight = chromaMergeRegtionHeight | | |
| 27 | } | | |
| 28 | if( tu_cbf_cb[ x0 ][ y0 ] ) | | |
| 29 | residual_coding( x0, y0, Log2( tbWidth / 2 ), Log2( tbHeight / 2 ), 1 ) | | |
| 30 | if( tu_cbf_cr[ x0 ][ y0 ] ) | | |
| 31 | residual_coding( x0, y0, Log2( tbWidth / 2 ), Log2( tbHeight / 2 ), 2 ) | | |
| 32 | } | | |
| 33 | | | |

FIG. 16

<table>
<tr><td>1</td><td>coding_tree( x0, y0, cbWidth, cbHeight, cqtDepth, mttDepth, depthOffset, partIdx, IsChromaMergeRegion, treeType ) {</td><td>Descriptor</td><td></td></tr>
<tr><td>2</td><td>if( ( allowSplitBtVer || allowSplitBtHor || allowSplitTtVer || allowSplitTtHor || allowSplitQt ) &&<br>( x0 + cbWidth <= pic_width_in_luma_samples ) &&<br>(y0 + cbHeight <= pic_height_in_luma_samples ) )</td><td></td><td></td></tr>
<tr><td>3</td><td>split_cu_flag</td><td>ae(v)</td><td></td></tr>
<tr><td>4</td><td>...</td><td></td><td></td></tr>
<tr><td>5</td><td>if( split_cu_flag ) {</td><td></td><td></td></tr>
<tr><td>6</td><td>if( allowSplitQt && ( allowSplitBtVer || allowSplitBtHor || allowSplitTtVer || allowSplitTtHor ) )</td><td></td><td></td></tr>
<tr><td>7</td><td>split_qt_flag</td><td>ae(v)</td><td></td></tr>
<tr><td>8</td><td>if( !split_qt_flag ) {</td><td></td><td></td></tr>
<tr><td>9</td><td>if( ( allowSplitBtHor || allowSplitTtHor ) &&<br>( allowSplitBtVer || allowSplitTtVer ) )</td><td></td><td></td></tr>
<tr><td>10</td><td>mtt_split_cu_vertical_flag</td><td>ae(v)</td><td></td></tr>
<tr><td>11</td><td>if( ( allowSplitBtVer && allowSplitTtVer && mtt_split_cu_vertical_flag ) ||<br>( allowSplitBtHor && allowSplitTtHor && !mtt_split_cu_vertical_flag ) )</td><td></td><td></td></tr>
<tr><td>12</td><td>mtt_split_cu_binary_flag</td><td>ae(v)</td><td></td></tr>
<tr><td>13</td><td>if((((MttSplitMode[ x0 ][ y0 ][ mttDepth ] == SPLIT_BT_VER || MttSplitMode[ x0 ][ y0 ][ mttDepth ] == SPLIT_BT_HOR) && (cbWidth*cbHeight /2) < 64 ) || ((MttSplitMode[ x0 ][ y0 ][ mttDepth ] == SPLIT_TT_VER || MttSplitMode[ x0 ][ y0 ][ mttDepth ] == SPLIT_TT_HOR) && (cbWidth*cbHeight /4) < 64) )&& IsChromaMergeRegion == 0 && ( x0 + cbWidth) <= pic_width_in_luma_samples && ( y0 + cbHeight ) <= pic_height_in_luma_samples && treeType != DUAL_TREE_CHROMA){) {</td><td></td><td>Corresponds to (1)</td></tr>
<tr><td>14</td><td>IsChromaMergeRegion = 1</td><td></td><td rowspan="5">Corresponds to (2)</td></tr>
<tr><td>15</td><td>IsPredModeFlagCoded = 0</td><td></td></tr>
<tr><td>16</td><td>chromaMergeRegionTopLeftX = x0</td><td></td></tr>
<tr><td>17</td><td>chromaMergeRegionTopLeftY= y0</td><td></td></tr>
<tr><td>18</td><td>}</td><td></td></tr>
<tr><td>19</td><td>...</td><td></td><td></td></tr>
<tr><td>20</td><td>}</td><td></td><td></td></tr>
<tr><td>21</td><td>}</td><td></td><td></td></tr>
</table>

FIG. 17

<table>
<tr><td>1</td><td>coding_tree( x0, y0, cbWidth, cbHeight, cqtDepth, mttDepth, depthOffset, partIdx, IsChroma MergeRegion, treeType ) {</td><td>Descriptor</td><td></td></tr>
<tr><td>2</td><td>if( ( allowSplitBtVer || allowSplitBtHor || allowSplitTtVer || allowSplitTtHor || allowSplitQt ) &&<br>( x0 + cbWidth <= pic_width_in_luma_samples ) &&<br>(y0 + cbHeight <= pic_height_in_luma_samples ) )</td><td></td><td></td></tr>
<tr><td>3</td><td>split_cu_flag</td><td>ae(v)</td><td></td></tr>
<tr><td>4</td><td>...</td><td></td><td></td></tr>
<tr><td>5</td><td>if( split_cu_flag ) {</td><td></td><td></td></tr>
<tr><td>6</td><td>if( allowSplitQt && ( allowSplitBtVer || allowSplitBtHor || allowSplitTtVer || allowSplitTtHor ) )</td><td></td><td></td></tr>
<tr><td>7</td><td>split_qt_flag</td><td>ae(v)</td><td></td></tr>
<tr><td>8</td><td>if( !split_qt_flag ) {</td><td></td><td></td></tr>
<tr><td>9</td><td>..</td><td></td><td></td></tr>
<tr><td>10</td><td>} else {</td><td></td><td></td></tr>
<tr><td>11</td><td>if (IsChromaMergeRegion == 0 && (cbWidth*cbHeight/4) < 64 && (x0 + cbWidth) <= pic_width_in_luma_samples && (y0 + cbHeight) <= pic_height_in_luma_samples && treeType != DUAL_TREE_CHROMA) {</td><td></td><td>Corresponds to (1)</td></tr>
<tr><td>12</td><td>IsChromaMergeRegion = 1</td><td></td><td>Corresponds to (2)</td></tr>
<tr><td>13</td><td>IsPredModeFlagCoded = 0</td><td></td><td></td></tr>
<tr><td>14</td><td>chromaMergeRegionTopLeftX = x0</td><td></td><td></td></tr>
<tr><td>15</td><td>chromaMergeRegionTopLeftY= y0</td><td></td><td></td></tr>
<tr><td>16</td><td>}</td><td></td><td></td></tr>
<tr><td>17</td><td>x1 = x0 + ( cbWidth / 2 )</td><td></td><td></td></tr>
<tr><td>18</td><td>y1 = y0 + ( cbHeight / 2 )</td><td></td><td></td></tr>
<tr><td>19</td><td>coding_tree( x0, y0, cbWidth / 2, cbHeight / 2, cqtDepth + 1, 0, 0, 0, treeType )</td><td></td><td></td></tr>
<tr><td>20</td><td>if( x1 < pic_width_in_luma_samples )</td><td></td><td></td></tr>
<tr><td>21</td><td>coding_tree( x1, y0, cbWidth / 2, cbHeight / 2, cqtDepth + 1, 0, 0, 1, treeType )</td><td></td><td></td></tr>
<tr><td>22</td><td>if( y1 < pic_height_in_luma_samples )</td><td></td><td></td></tr>
<tr><td>23</td><td>coding_tree( x0, y1, cbWidth / 2, cbHeight / 2, cqtDepth + 1, 0, 0, 2, treeType )</td><td></td><td></td></tr>
<tr><td>24</td><td>if( y1 < pic_height_in_luma_samples && x1 < pic_width_in_luma_samples )</td><td></td><td></td></tr>
<tr><td>25</td><td>coding_tree( x1, y1, cbWidth / 2, cbHeight / 2, cqtDepth + 1, 0, 0, 3, treeType )</td><td></td><td></td></tr>
<tr><td>26</td><td>}</td><td></td><td></td></tr>
<tr><td>27</td><td>}</td><td></td><td></td></tr>
</table>

FIG. 18

| 1 | coding_tree( x0, y0, cbWidth, cbHeight, cqtDepth, mttDepth, depthOffset, partIdx, treeType ) { | Descriptor |
|---|---|---|
| 2 | if( ( allowSplitBtVer \|\| allowSplitBtHor \|\| allowSplitTtVer \|\| allowSplitTtHor \|\| allowSplitQt ) &&<br>( x0 + cbWidth <= pic_width_in_luma_samples ) &&<br>(y0 + cbHeight <= pic_height_in_luma_samples ) ) | |
| 3 | **split_cu_flag** | ae(v) |
| 4 | … | |
| 5 | if( split_cu_flag ) { | |
| 6 | … | |
| 7 | | |
| 8 | | |
| 9 | } else | |
| 10 | coding_unit( x0, y0, cbWidth, cbHeight, partIdx, treeType ) | |
| 11 | //(4): in the case of the chroma merge region and the intra-frame mode, and upper-left of the chroma merge region, invoke the chroma separate CU. | |
| 12 | if (IsChromaMergeRegion && PredModeFlagInfer == MODE_INTRA && x0 == chromaMergeRegtionTopLeftX && y0 == chromaMergeRegtionTopLeftY) | |
| 13 | coding_unit( x0, y0, cbWidth, cbHeight, partIdx, DUAL_TREE_CHROMA ) | |
| 14 | } | |
| 15 | } | |

Corresponds to (4) (rows 11–13)

FIG. 19

| | | | |
|---|---|---|---|
| 1 | coding_unit( x0, y0, cbWidth, cbHeight, partIdx, treeType ) { | Descriptor | |
| 2 | if( tile_group_type != I ) { | | |
| 3 | if( treeType != DUAL_TREE_CHROMA ) | | |
| 4 | **cu_skip_flag**[ x0 ][ y0 ] | ae(v) | |
| 5 | //(4) Option 1: use IsPredModeFlagCoded for determination | | |
| 6 | if( cu_skip_flag[ x0 ][ y0 ] = = 0 && (IsPredModeFlagCoded == 0 \|\| !IsChromaMergeRegion) ) { | | |
| 7 | **pred_mode_flag** | ae(v) | Corresponds to (3) |
| 8 | PredModeFlagInfer = pred_mode_flag | | |
| 9 | IsPredModeFlagCoded = 1 | | |
| 10 | } | | |
| 11 | //(4) Option 2: use chromaMergeRegion and consistency of upper-left coordinates for determination | | |
| 12 | if( cu_skip_flag[ x0 ][ y0 ] = = 0 && (IsChromaMergeRegion == 0 \|\| x0 == chromaMergeRegtionTopLeftX && y0 == chromaMergeRegtionTopLeftY) { | | |
| 13 | **pred_mode_flag** | ae(v) | Corresponds to (3) |
| 14 | PredModeFlagInfer = pred_mode_flag | | |
| 15 | } | | |
| 16 | | | |
| 17 | } | | |
| 18 | } | | |
| 19 | //(1): Transfer to luma split tree. It was intended to execute at a coding_tree level, but cannot be determined if pred_mode_flag without coding_unit is not seen, so the tree is rewritten in coding_unit. | | |
| 20 | if (IsChromaMergeRegion && treeType == SINGLE_TREE && PredModeFlagInfer == MODE_INTRA ) { | | Corresponds to (5) |
| 21 | treeType = DUAL_TREE_LUMA | | |
| 22 | } | | |
| 23 | if( CuPredMode[ x0 ][ y0 ] = = MODE_INTRA ) { | | |
| 24 | ... | | |
| 25 | } else if( treeType != DUAL_TREE_CHROMA ) { /* MODE_INTER */ | | |
| 26 | ... | | |
| 27 | } | | |
| 28 | | | |
| 29 | } | | |

FIG. 20

## INTERNATIONAL SEARCH REPORT

International application No.
PCT/JP2020/009356

A. CLASSIFICATION OF SUBJECT MATTER
Int.Cl. H04N19/136(2014.01)i, H04N19/176(2014.01)i, H04N19/186(2014.01)i, H04N19/70(2014.01)i, H04N19/96(2014.01)i
FI: H04N19/96, H04N19/136, H04N19/186, H04N19/176, H04N19/70
According to International Patent Classification (IPC) or to both national classification and IPC

B. FIELDS SEARCHED
Minimum documentation searched (classification system followed by classification symbols)
Int.Cl. H04N19/00-19/98

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | AN, J. C., SUN, Y. C., LOU, J., CE1-related: flexible luma and chroma block partitioning trees separation, Joint Video Experts Team (JVET) of ITU-T SG 16 WP 3 and ISO/IEC JTC 1/SC 29/WG 11 12th Meeting: Macao, CN, 3-12 October 2018, JVET-L0184, 2018.10, pp.1-8<br>2. Proposed flexible luma and chroma block partitioning trees separation | 1-3<br>4-6 |
| A | ZHOU, T. Y., IKAI, Tomohiro, Non-CE3: intra chroma partitioning and prediction restriction, Joint Video Exploration Team (JVET) of ITU-T SG 16 WP 3 and ISO/IEC JTC 1/SC 29/WG 11 13th Meeting: Marrakesh, MA, 9-18 January 2019, JVET-M0065, 2019.01, pp.1-4<br>2. Proposal | 1-6 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 20.05.2020 | 02.06.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019043098 A


### Non-patent literature cited in the description


- Versatile Video Coding (Draft 4). *JVET-M1001-v1, Joint Video Exploration Team (JVET) of ITU-T SG 16 WP 3 and ISO/IEC JTC 1/SC 29/WG 11,* 01 February 2019
- Non-CE3: Intra Chroma Partitioning and Prediction Restriction. *JVET-M0065-v1, Joint Video Exploration Team (JVET) of ITU-T SG 16 WP 3 and ISO/IEC JTC 1/SC 29/WG 11,* 28 December 2018
- CE3-related: Shared Reference Samples for Multiple Chroma Intra CBs. *JVET-M0169-v1, Joint Video Exploration Team (JVET) of ITU-T SG 16 WP 3 and ISO/IEC JTC 1/SC 29/WG 11,* 02 January 2019